# EUROPEAN PATENT APPLICATION

(11) **EP 4 567 569 A1**
(43) Date of publication of application: **11.06.2025**
(21) Application number: 23850472.4
(22) Date of filing: 03.08.2023
(51) Int. Cl.: G06F 3/04817, G06Q 10/10, G06F 3/0484, G06F 3/0482

(54) **METHOD FOR INPUTTING CATEGORIZED SCHEDULE BY USING CALENDAR APPLICATION**

(30) Priority: 05.08.2022 KR 20220097782
(71) Applicant: C.G.TAE Technology Inc., Seongnam-si Gyeonggi-do 13595 (KR)
(72) Inventor: TAE, Chul Gyu, Seongnam-si Gyeonggi-do 13595 (KR); TAE, Choe, Seongnam-si Gyeonggi-do 13595 (KR)
(74) Representative: Zacco Sweden AB
(86) International application number: PCT/KR2023/011446
(87) International publication number: WO 2024/029972

(57) **Abstract**

A method of inputting schedules including multiple categories, comprises: providing, on a category selection window of a user interface of a calendar application, selectable item buttons corresponding to each of at least two categories of a schedule simultaneously, wherein the at least two categories are associated with each other, and the provided item buttons are set differently for each user, receiving a selection of at least one item button among item buttons belonging to one of the at least two categories on the category selection window, and in response to the selection of the at least one item button, modifying and presenting item buttons belonging to the other one of the at least two categories on the category selection window, wherein the number of the modified item buttons is smaller than the number of the item buttons before modification.

## Description

### Technical Field

The present disclosure relates to a method of inputting categorized schedules using a calendar application, and more specifically, to a method that enables a user to input schedules by categorizing them, thereby allowing the user to systematically manage their schedules and enabling the generation of meaningful statistical data regarding the schedules.

### Background Art

The use of calendar applications on various user devices, such as personal computers (PCs), laptops, tablets, mobile phones, and wearable devices, has become widespread. These calendar applications initially only had functions, such as simply displaying a calendar and allowing users to input simple schedules. However, they have gradually evolved to include various features that enhance the user experience. However, the majority of users of conventional calendar applications often do not fully utilize or are unable to utilize most of the various features offered. In most cases, they use calendar applications merely for sporadically recording a few schedules and setting reminders.

### Summary of Invention

### Technical Problem

Accordingly, an object of the present disclosure is to provide a user interface that can enhance the user's utilization of the calendar application. More specifically, the present disclosure aims to provide a user interface that allows users to input schedules into the calendar application quickly and easily, enabling them to intuitively grasp their schedules and plans at a glance through the calendar application, thereby improving their work efficiency.

Additionally, another object of the present disclosure is to provide a user interface that enables users to input schedules by categorizing them, thereby allowing users to systematically manage their schedules and facilitating the generation of meaningful statistical data regarding the schedules.

However, the problems to be solved by the present disclosure are not limited to those mentioned above. The objects not explicitly mentioned but clearly understood by those skilled in the art to which the present disclosure pertains, based on the following description, are also included within the scope of the present disclosure.

### Solution to Problem

According to some aspects of the disclosure, a method of inputting schedules including multiple categories, comprises: providing, on a category selection window of a user interface of a calendar application, selectable item buttons corresponding to each of at least two categories of a schedule simultaneously, wherein the at least two categories are associated with each other, and the provided item buttons are set differently for each user, receiving a selection of at least one item button among item buttons belonging to one of the at least two categories on the category selection window, and in response to the selection of the at least one item button, modifying and presenting item buttons belonging to the other one of the at least two categories on the category selection window, wherein the number of the modified item buttons is smaller than the number of the item buttons before modification.

According to some aspects, the method of inputting schedules including multiple categories according to claim 1, wherein the at least two categories have a relationship as an upper category and a lower category.

According to some aspects, the method of inputting schedules including multiple categories according to claim 1, wherein the user interface includes an input panel configured to input a time and a category for a schedule, and the method further comprises: displaying the selected at least one item button on the input panel in response to receiving a selection of at least one item button among item buttons belonging to one of the at least two categories on the category selection window.

According to some aspects, the method of inputting schedules including multiple categories according to claim 3, wherein the modifying and presenting item buttons belonging to the other one of the at least two categories on the category selection window in response to the selection of the at least one item button comprises: presenting at least some of the modified and presented item buttons belonging to the other one of the at least two categories on the input panel.

According to some aspects, the method of inputting schedules including multiple categories according to claim 4, wherein the input panel includes a first item display section and a second item display section, wherein the selected at least one item button is presented in the first item display section of the input panel, and wherein at least some of the modified and presented item buttons belonging to the other one of the at least two categories are presented in the second item display section of the input panel.

According to some aspects, the method of inputting schedules including multiple categories according to claim 1, wherein the modifying and presenting item buttons belonging to the other one of the at least two categories on the category selection window in response to the selection of the at least one item button comprises: presenting the modified and presented item buttons by ranking them based on usage frequency.

According to some aspects, the method of inputting schedules including multiple categories according to claim 1, wherein: the categories of the schedule include a first category, a second category, a third category, and a fourth category in order from upper to lower; the one of the at least two categories on the category selection window is the third category, and the other of the at least two categories is the fourth category; and by selecting the selected at least one item button, the first category and the second category are automatically determined.

According to some aspects, the method of inputting schedules including multiple categories according to claim 1, wherein, before receiving the selection of an item button, the selectable item buttons corresponding to each of the at least two categories of the schedule presented on the category selection window include either item buttons recently used by the user or all item buttons of a specific category.

According to some aspects, the method of inputting schedules including multiple categories according to claim 1, further comprising: receiving a selection of at least one of the modified and presented item buttons; receiving a selection of a registration button for registering the schedule; and in response to the selection of the registration button, generating a schedule item in at least one of a timeline or a schedule display table of the user interface.

According to some aspects of the disclosure, a method of inputting schedules including multiple categories, comprises: providing, on a category selection window of a user interface of a calendar application, at least one selectable item button for a specific category of a schedule, receiving a selection of at least one item button among the at least one item button on the category selection window, and presenting, on an input panel of the user interface, at least one item button for a category associated with the category to which the selected at least one item button belongs, wherein the input panel is configured to receive user input for time and category of the schedule.

According to some aspects, the method of inputting schedules including multiple categories according to claim 10, wherein the category associated with the category to which the selected at least one item button belongs is an upper category or a lower category of the category to which the selected at least one item button belongs.

According to some aspects, the method of inputting schedules including multiple categories according to claim 10, wherein the categories of the schedule include a first category, a second category, a third category, and a fourth category in order from upper to lower; wherein the category to which the selected at least one item button belongs is the third category; wherein the category associated with the category to which the selected at least one item button belongs is the fourth category; and wherein by selecting the selected at least one item button, the first category and the second category are automatically determined.

According to some aspects of the disclosure, an apparatus implementing an application for inputting schedules including multiple categories, the apparatus comprises: a processor, and a memory including computer-executable instructions, wherein the computer-executable instructions, when executed by the processor, cause the processor to: provide, on a category selection window of a user interface of a calendar application, selectable item buttons corresponding to each of at least two categories of a schedule simultaneously, wherein the at least two categories are associated with each other, and the provided item buttons are set differently for each user, receive a selection of at least one item button among item buttons belonging to one of the at least two categories on the category selection window, and in response to the selection of the at least one item button, modify and present item buttons belonging to the other one of the at least two categories on the category selection window, wherein the number of the modified item buttons is smaller than the number of the item buttons before modification.

According to some aspects of the disclosure, a computer-readable recording medium storing computer-executable instructions, wherein the computer-executable instructions, when executed by a processor, cause the processor to: provide, on a category selection window of a user interface of a calendar application, selectable item buttons corresponding to each of at least two categories of a schedule simultaneously, wherein the at least two categories are associated with each other, and the provided item buttons are set differently for each user, receive a selection of at least one item button among item buttons belonging to one of the at least two categories on the category selection window, and in response to the selection of the at least one item button, modify and present item buttons belonging to the other one of the at least two categories on the category selection window, wherein the number of the modified item buttons is smaller than the number of the item buttons before modification.

### Advantageous Effects

According to embodiments of the present disclosure, a user interface that enhances the utilization of the calendar application can be provided. More specifically, the present disclosure aims to provide a user interface that allows users to input schedules into the calendar application quickly and easily, enabling them to intuitively grasp their schedules and plans at a glance through the calendar application, thereby improving their work efficiency.

Additionally, according to embodiments of the present disclosure, a user interface can be provided that enables users to input schedules by categorizing them, thereby allowing users to systematically manage their schedules and facilitating the generation of meaningful statistical data regarding the schedules.

However, the effects achievable by the present disclosure are not limited to those mentioned above. Other effects not explicitly mentioned may also be clearly understood by those skilled in the art to which the present disclosure pertains based on the following description.

### BRIEF DESCRIPTION OF THE DRAWINGS

The following drawings attached to the present specification illustrate preferred embodiments of the present disclosure and serve to further aid in understanding the technical spirit of the present disclosure in conjunction with the detailed description. Therefore, the present disclosure should not be construed as being limited only to the matters described in such drawings.
FIGS. 1a and 1b are diagrams illustrating examples of a system for using a calendar application according to an embodiment of the present disclosure.
FIG. 2 is an exemplary diagram illustrating the main screen of the user interface for the calendar application according to an embodiment of the present disclosure.
FIGS. 3 and 4 are exemplary screens illustrating the main window of the user interface for the calendar application according to an embodiment of the present disclosure when scrolled upward and downward, respectively.
FIGS. 5a and 5b are exemplary diagrams illustrating the basic form and the expanded form of the timeline for dates other than today in the user interface of the calendar application according to an embodiment of the present disclosure.
FIG. 6a is an exemplary diagram illustrating the category selection window 210 of the user interface for the calendar application according to an embodiment of the present disclosure.
FIGS. 6b and 6c are diagrams illustrating additional usage examples of the category selection window in the calendar application according to an embodiment of the present disclosure.
FIG. 7a is a diagram illustrating the input panel 220 according to an embodiment of the present disclosure.
FIG. 7b is a diagram illustrating an additional usage example of the input panel according to an embodiment of the present disclosure.
FIG. 7c is a diagram illustrating a user interface in which counterparts for a schedule and attached files have been added, according to an embodiment of the present disclosure.
FIG. 8 is an exemplary diagram illustrating a method for entering time through the time input section 221 according to an embodiment of the present disclosure.
FIGS. 9a, 9b, 9c, and 9d are diagrams illustrating, by way of example, the operation method of the item display section in the input panel of the calendar application according to an embodiment of the present disclosure.
FIGS. 10a and 10b are diagrams illustrating exemplary usage methods of the quick buttons in the input panel of the user interface of the calendar application according to an embodiment of the present disclosure.
FIG. 11 is a diagram illustrating the schedule display table 240 in the user interface of the calendar application according to an embodiment of the present disclosure.
FIG. 12 is an exemplary diagram illustrating a method for adding a schedule using a recycle button of the schedule items according to an embodiment of the present disclosure.
FIG. 13 is an exemplary diagram illustrating a method for adding a schedule using the edit button of the schedule items according to an embodiment of the present disclosure.
FIG. 14 is a diagram illustrating the timeline 230 of the user interface of the calendar application according to an embodiment of the present disclosure.
FIG. 15 is an exemplary diagram illustrating a process for determining the status of a schedule box for a planned schedule in the second timeline according to an embodiment of the present disclosure.
FIGS. 16a, 16b, and 16c are exemplary diagrams illustrating the cases where the user selects the adopt icon, defer icon, and cancel icon for the schedule box of a planned schedule prior to the current time, respectively.
FIG. 17a is a flowchart illustrating a method of inputting categorized schedules through the calendar application according to an embodiment of the present disclosure.
FIG. 17b is a flowchart illustrating a method of inputting a categorized schedule through a calendar application according to another embodiment of the present disclosure.
FIG. 18, which illustrates examples of category selection windows 210a and 210b in the calendar application according to other embodiments of the present disclosure.
FIGS. 19 and 20 are diagrams illustrating a method for recommending categories for a schedule through an artificial neural network module according to another embodiment of the present disclosure.

### DETAILED DESCRIPTION

The terms or words used in the disclosure and the claims should not be construed as limited to their ordinary or lexical meanings. They should be construed as the meaning and concept in line with the technical idea of the disclosure based on the principle that the inventor can define the concept of terms or words in order to describe his/her own inventive concept in the best possible way. Further, since the embodiment described herein and the configurations illustrated in the drawings are merely one embodiment in which the disclosure is realized and do not represent all the technical ideas of the disclosure, it should be understood that there may be various equivalents, variations, and applicable examples that can replace them at the time of filing this application.

Although terms such as first, second, A, B, etc. used in the description and the claims may be used to describe various components, the components should not be limited by these terms. These terms are only used to differentiate one component from another. For example, a first component may be referred to as a second component, and similarly, a second component may be referred to as a first component, without departing from the scope of the disclosure. The term 'and/or' includes a combination of a plurality of related listed items or any item of the plurality of related listed items.

The terms used in the description and the claims are merely used to describe particular embodiments and are not intended to limit the disclosure. Singular forms are intended to include plural forms unless the context clearly indicates otherwise. In the application, terms such as "comprise," "comprise," "have," etc. should be understood as not precluding the possibility of existence or addition of features, numbers, steps, operations, components, parts, or combinations thereof described herein.

Unless otherwise defined, the phrases "A, B, or C," "at least one of A, B, or C," or "at least one of A, B, and C" may refer to only A, only B, only C, both A and B, both A and C, both B and C, all of A, B, and C, or any combination thereof.

Unless being defined otherwise, all terms used herein, including technical or scientific terms, have the same meaning as commonly understood by those skilled in the art to which the disclosure pertains.

Terms such as those defined in commonly used dictionaries should be construed as having a meaning consistent with the meaning in the context of the relevant art, and are not to be construed in an ideal or excessively formal sense unless explicitly defined in the application. In addition, each configuration, procedure, process, method, or the like included in each embodiment of the disclosure may be shared to the extent that they are not technically contradictory to each other.

### System for Using a Calendar Application

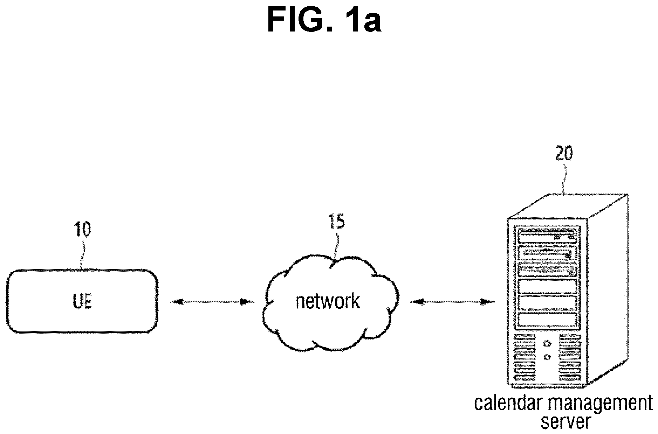

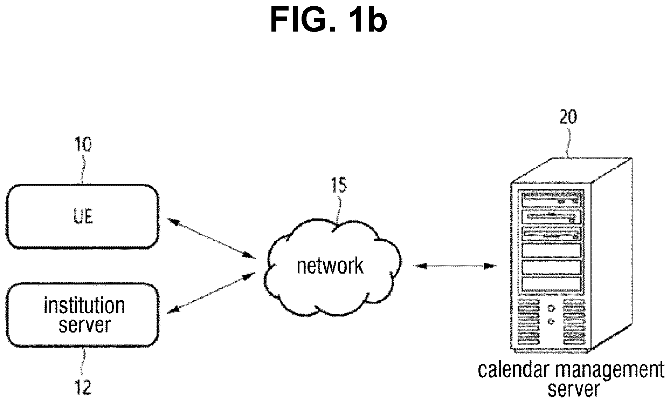

FIGS. 1a and 1b are diagrams illustrating examples of a system for using a calendar application according to an embodiment of the present disclosure.

Referring to the system shown in FIG. 1a, a user device 10 may be connected to a calendar management server 20 via a network 15. According to embodiments of the present disclosure, the calendar application may be installed on the user device 10 or may be used by utilizing calendar application-related resources of the calendar management server 20 in the form of a cloud through the user device 10. Additionally, the calendar application may be distributed across the user device 10 and the calendar management server 20.

The user device 10 may be any device equipped with a display capable of displaying the calendar application, such as a personal computer (PC), laptop, tablet, mobile phone, or wearable device, and may connect to the calendar management server via a network. The same user may use two or more user devices. In this case, the calendar application may operate in synchronization across the user's devices, or it may operate on only one user device at a time. The present disclosure does not limit the implementation method in this regard.

The network 15 may be a wired or wireless network. The user device 10 may connect to the network 15 through a wired LAN cable, through wireless internet such as Wi-Fi, 3G/4G/5G data networks at locations equipped with wireless access points (APs), or by transmitting and receiving wireless signals with peripheral devices to connect to the network 15. The specific method of connection is not limited.

The calendar management server 20 may be a server for providing, servicing, and managing the calendar application. As an example, the calendar management server 20 may provide services and updates for the calendar application, collect various data related to the calendar application, and generate and provide statistical information. The calendar management server 20 may provide the calendar application in the form of a cloud service or deliver calendar-related services through communication with the calendar application installed on the user device 10. The specific operational methods are not limited.

Referring to the system shown in FIG. 1b, the user device 10 and the institution server 12 may be connected to a calendar management server 20 via a network 15. The institution server 12, for example, may be a server operated by various institutions such as companies, schools, public institutions, or research institutes, and the user device 10 may be a personal device belonging to an individual affiliated with such an institution. In this case, the user device 10 may use the calendar application provided through the institution server 12 or, similar to the example in FIG. 1a, use the calendar application installed on the user device 10 itself or by utilizing the resources of the calendar management server 20.

However, unlike the examples in FIGS. 1a and 1b, the calendar application may be used solely on the user device, or it may operate in the form of an intranet only between the institution server and the user device without being connected to the calendar management server 20. The specific implementation methods are not limited.

In the example of the system in FIG. 1a and the example of the system in FIG. 1b, the user device 10 connects to the calendar management server 20 via the network 15, and the schedule data generated by the user utilizing the calendar application on the user device 10 may be collected by at least one of the calendar management server 20 or the institution server 12. For such schedule data to be collected and meaningful statistical data to be generated, the utilization of the calendar application must be enhanced. To achieve this, users need to be provided with motivation to actively use the calendar application. The calendar application and its user interface according to an embodiment of the present disclosure include various elements that enable users to gain positive experiences, such as improved work efficiency and prompt work feedback, through the use of the calendar application. These elements will be described in detail later. Meanwhile, in this regard, there may be issues related to privacy concerns, however, the present disclosure focuses solely on the technical aspects, irrespective of such issues.

### Configuration of the Main Screen of the User Interface for the Calendar Application

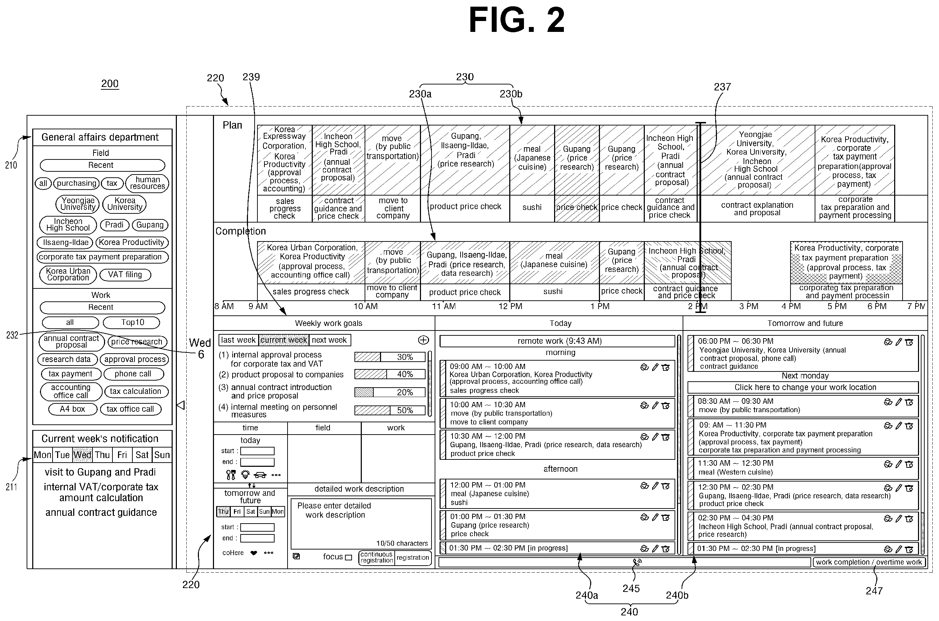

FIG. 2 is an exemplary diagram illustrating the main screen of the user interface for the calendar application according to an embodiment of the present disclosure.

In the user interface of the calendar application according to an embodiment of the present disclosure, the term "main screen" refers to the screen presented to the user upon first logging into the calendar application. However, the term "main screen" is used merely for convenience of explanation, and the user may customize the initial screen settings of the calendar application, the configuration may vary depending on the display size of the user device, or the layout of the initial screen may change according to updates to the calendar application. Therefore, the configuration of the main screen described below is merely exemplary.

Additionally, for convenience of explanation, this specification describes "a first time range" as referring to today, "a second time range" as referring to tomorrow and the future (dates after tomorrow), and "a third time range" as referring to the past (yesterday and dates before yesterday). However, the first to third time ranges may each be defined as different time ranges, and they are not limited thereto.

Referring to FIG. 2, the main screen 200 of the user interface for the calendar application may include: a category selection window 210 that allows for the selection and input of one or more categories of schedules; an input panel 220 for entering the time, category, and detailed work description for schedules of today (i.e., the first time range) or tomorrow and the future (i.e., the second time range); a timeline 230 that includes a planned timeline and a completed timeline, which respectively display in chronological order the planned schedules the user intends to carry out today and the completed schedules actually carried out; and a schedule display table 240 that displays the schedules for today and for tomorrow and the future in the form of separate tables.

Here, the schedules displayed on the timeline 230 and those displayed in the schedule display table 240 may be at least partially synchronized. Specifically, since the timeline 230 pertains to today's planned schedules and completed schedules, it may be synchronized with the table 240a, which represents today's schedules within the schedule display table 240. Additionally, as will be described later, the user interface of the calendar application may include not only the timeline 230 for today but also a timeline for tomorrow and the future, as well as a timeline for the past. Among these, the timeline for tomorrow and the future may be synchronized with the table 240b, which represents schedules for tomorrow and the future within the schedule display table 240.

Additionally, the schedules entered through the input panel 220 may either be newly registered schedules that will be created in the timeline 230 and the schedule display table 240, or schedules selected for editing from among those already displayed in the timeline 230 and the schedule display table 240. The specific methods for creating and editing schedules will be described in detail later.

Additionally, the main screen 200 may further include: a goal display section 239 for graphically displaying the progress of work goals; a call history check button 245 that allows the user to save and view key call records; a work completion button 247 that enables the user to select between leaving work or working overtime; and a date display section 232 that displays schedule-related dates, work locations, and other schedule-related information. Additionally, below the category selection window 210, there may be a weekly notification display section 211 that provides information on the planned schedules for the current week and a personal notepad (not shown).

Here, the call history check button 245 allows the user to save and view key call records. The user may simply save such call records (e.g., incoming/outgoing status, call time, counterpart, call details), associate them with specific schedules, or store related call recording files. Additionally, functionalities such as automatically saving call records or recording files by syncing with devices like mobile phones may also be implemented.

As seen in the example of FIG. 2, the main screen 200 may include a category selection window 210 located in the left area of the main screen 200 and a main window 215 located to the right of the category selection window 210. Additionally, the timeline 230 may be located in the upper area of the main window 215, with the goal display section 239 and the input panel 220 positioned in the lower left section of the timeline 230, and the schedule display table 240 positioned in the center and lower right section of the timeline 230. However, the category selection window 210 may also be displayed in a location adjacent to the main window 215, and its position is not limited thereto.

In the user interface of the calendar application according to an embodiment of the present disclosure, by placing the category selection window 210, which allows for schedule input, in the left section of the main screen 200, and the input panel 220 in the lower central section, the user is enabled to perform schedule input intuitively and easily. Additionally, by arranging schedules in two formats, namely a timeline and a table, respectively in the upper section and the lower right section of the main screen 200, the user can conveniently and intuitively view and manage their schedule.

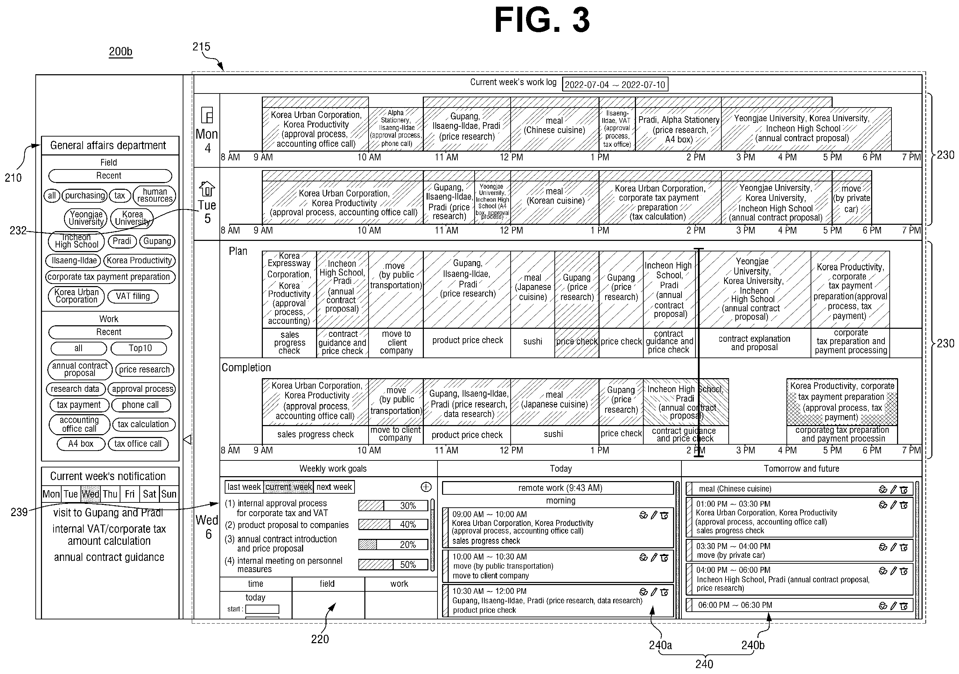

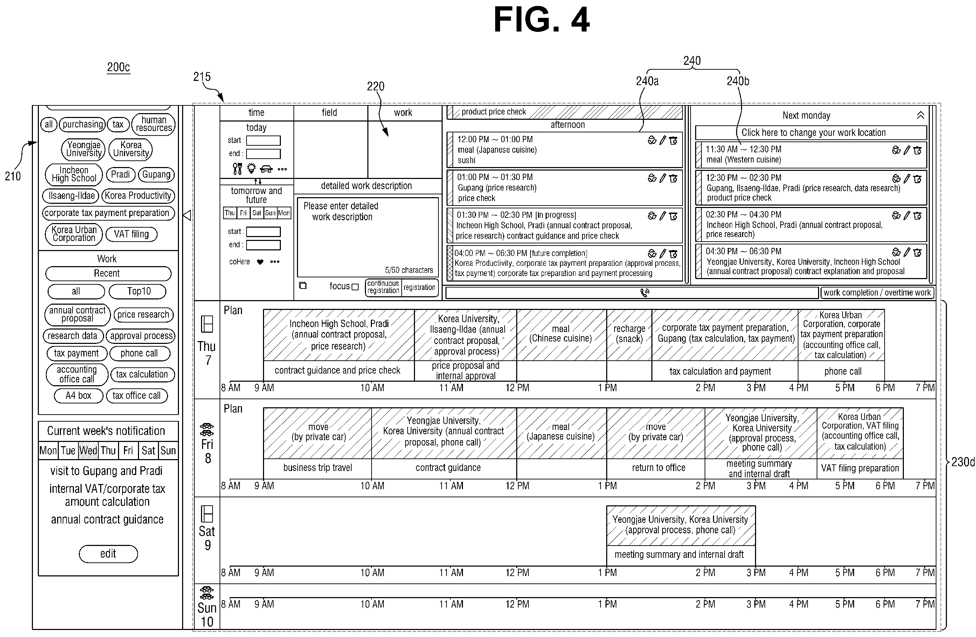

FIGS. 3 and 4 are exemplary screens illustrating the main window of the user interface for the calendar application according to an embodiment of the present disclosure when scrolled upward and downward, respectively. Referring to FIGS. 3 and 4, the main window 215 of the user interface for the calendar application according to an embodiment of the present disclosure is scrollable in the vertical direction.

First, referring to FIG. 3, in an exemplary screen 200b where the main window 215 is scrolled upward by manipulating the scrollbar or similar elements on the right side of the main window 215, one or more past timelines 230c, which display the schedules of yesterday (e.g., Tuesday) and the day before yesterday (e.g., Monday) in chronological order, may be displayed on the timeline 230 that chronologically shows today's (e.g., Wednesday's) schedules.

According to an embodiment of the present disclosure, the date range for the current week (e.g., "Current Week's Work Log 2002-07-04 ~ 2022-07-10") is displayed at the top of the main window 215, and only the timelines for the displayed current week, i.e., the schedule for a one-week period (Monday to Sunday of the week), may be viewed by scrolling. In the example of FIG. 3, today is Wednesday, and the past timeline 230c is shown to include two timelines corresponding to Tuesday and Monday. However, the number of past timelines 230c may vary depending on which day of the week today is.

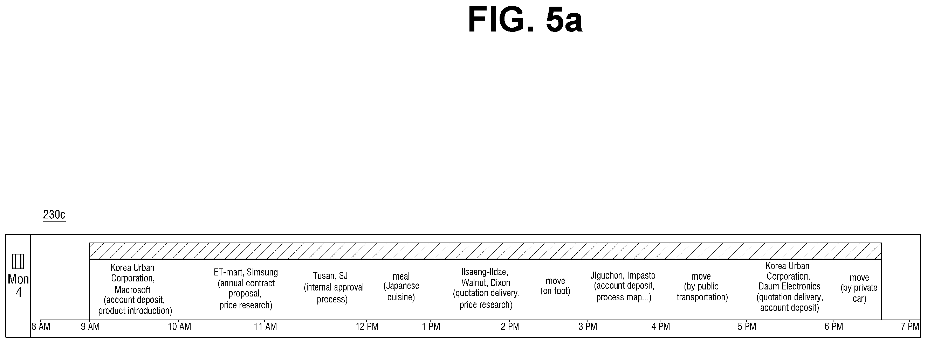

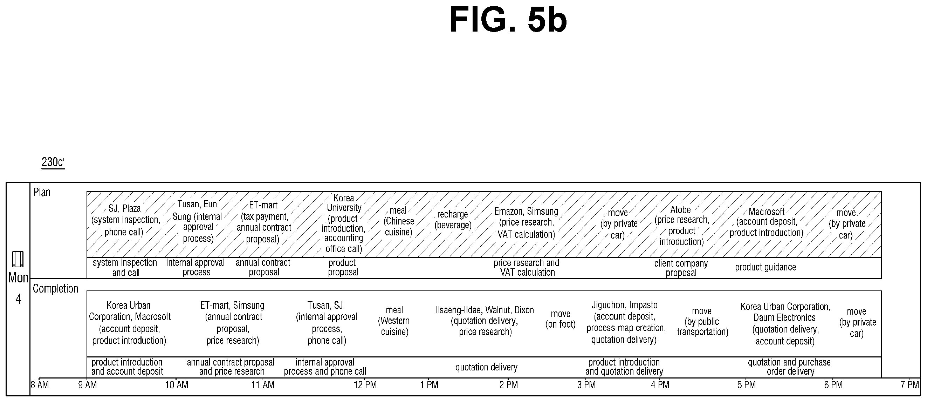

According to an embodiment, the past timeline 230c pertains to schedules prior to today (past) and may include both the timelines for planned schedules the user had set in the past and the timelines for completed schedules the user actually performed. For efficient use of display space, the planned schedules and completed schedules may each be displayed in a collapsed form. This will be described in detail later with reference to FIG. 5.

Referring to FIG. 4, in an exemplary screen 200c where the main window 215 is scrolled downward by manipulating the scrollbar or similar elements on the right side of the main window 215, one or more future timelines 230d, which display the schedules for tomorrow and the future in chronological order by date, may be displayed below the input panel 220 and the schedule display table 240. In the example of FIG. 4, since today is Wednesday, four future timelines 230d corresponding to Thursday through Sunday of the current week are displayed. Since the future timeline 230d pertains to the future, it does not include completed schedules and may only contain planned schedules.

FIGS. 5a and 5b are exemplary diagrams illustrating the basic form and the expanded form of the timeline for dates other than today in the user interface of the calendar application according to an embodiment of the present disclosure.

Referring to FIG. 5a, the past timeline 230c for dates prior to today, in the basic (default) form, may display the planned schedules in a thin format where only the time slots of the schedules are visible, while the completed schedules may be displayed in a state where only the category information of the schedules is visible, with the detailed work descriptions omitted. Overall, it may take the form where the simplified timeline for planned schedules is displayed in a thin format on the simplified timeline for completed schedules, and in this case, the planned schedules and completed schedules may be distinguished by different colors. Displaying the past timeline 230c in a simplified form (i.e., the basic form) is intended to efficiently utilize the display space of the main screen and the main window and to allow users to quickly grasp the details of the week's schedules and whether planned schedules have been established.

Referring to FIG. 5b, when the user selects or hovers over any position on the past timeline 230c using an input such as a mouse or touch, the past timeline 230c may transform into an expanded timeline 230c'. In the case of the expanded past timeline 230c', similar to the timeline 230 for today's date (refer to FIGS. 2 and 3), it may include two timelines: a planned timeline for planned schedules and a completed timeline for completed schedules. The planned schedules and completed schedules may be displayed chronologically, allowing users to view both the category information and detailed schedule information for each schedule.

Hereinafter, each component of the user interface for the calendar application according to an embodiment of the present disclosure will be described in detail.

### Category Selection Window

From the user's perspective, entering categories for schedules in addition to inputting the schedules themselves in the calendar application may feel cumbersome. On the other hand, from the perspective of the institution that introduced the calendar application or the calendar management server, being able to categorize individual users' schedule data allows for the collection of meaningful statistical data. Taking these points into consideration, an embodiment of the present disclosure newly introduces a category selection window and proposes a method that enables effective category input for schedules while minimizing the process of users spending time directly selecting categories.

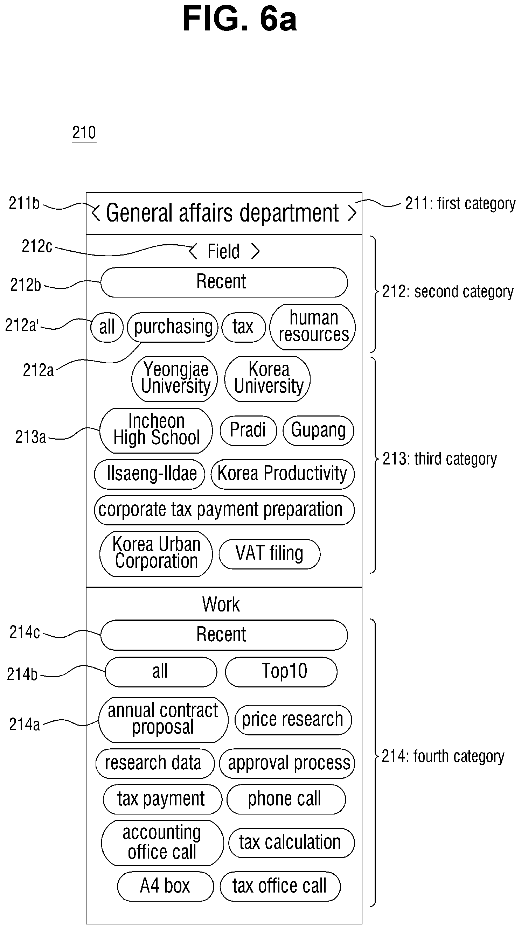

FIG. 6a is an exemplary diagram illustrating the category selection window 210 of the user interface for the calendar application according to an embodiment of the present disclosure.

In the example of FIG. 6a, as a non-limiting example, the category selection window 210 is described in the case where four categories may be input. However, the number of enterable categories is one or more and is not limited to a specific number. Additionally, although the number, items, or configuration of each category are described below with specific examples, these may vary depending on the needs of users, institutions, or other entities using the calendar application, and the configuration of the categories is not limited thereto.

Referring to FIG. 6a, among the four categories included in the category selection window 210, the first category 211 may be the highest-level category and, for example, may represent the "Department" category. The second category 212 may be the next-level category, which, for example, may classify "Fields" or "Teams." The third category 213 may be a lower category of the second category 212 and may classify "Projects," while the fourth category 214 may be a lower category of the third category 213 and may classify "Works." That is, the first category may represent general themes, the second category may represent specific themes, the third category may represent general works, and the fourth category may represent specific works. However, if necessary, the user may change to another category belonging to the first category 211 by selecting an arrow 211b, and in this case, the item buttons of the second to fourth categories, which are lower categories of the first category 211, as well as the names of each category, may also be changed accordingly.

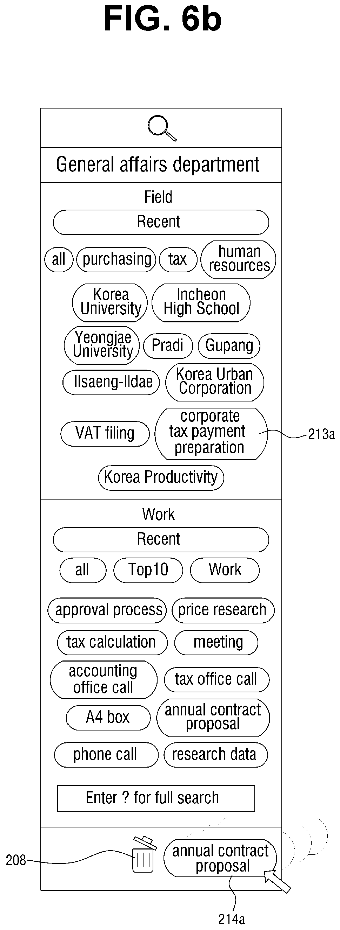

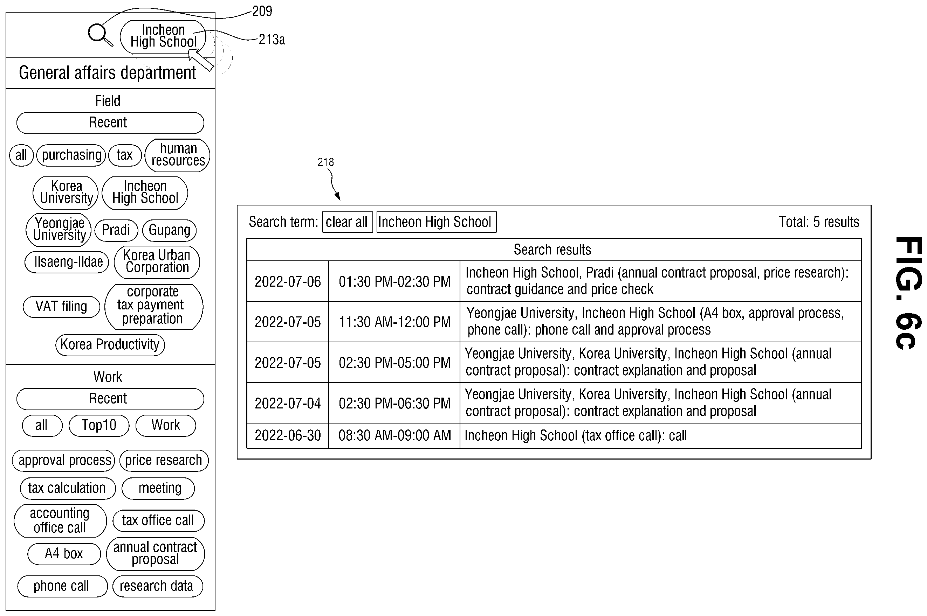

In another example, the category selection window 210 may include only two categories. For instance, the category selection window 210 may include only the third category 213 and the fourth category 214, without including the first and second categories. That is, the detailed configuration within the category selection window 210 may be modified based on user selection or other factors, and the form shown in FIG. 6 is merely exemplary.

First, according to one embodiment, the first category 211 may be the "Department" category and, for example, may include departments such as "General Affairs," "Engineering," "Sales," "Strategy," and "HR."

As the first category 211, the default category displayed on the main screen 200 may be the category of the department to which the user currently belongs (in the example of FIG. 6, "General Affairs") or the department category most recently used by the user for adding or editing schedules in the calendar application. This takes into account the fact that a user of the calendar application is relatively more likely to newly create or edit a schedule for the department to which they belong or for the department for which they have recently created or edited a schedule.

Through the default setting of the first category 211, the user of the calendar application is effectively considered to have already made a selection for the first category, even without explicitly selecting it. As a result, this allows category input to be received while minimizing the user's input.

The second category 212 may be a category that classifies "Fields" or "Teams" (hereinafter referred to as the "Field" category). Such a "Field" category may be designed considering that various fields of work or teams may exist within a department in an institution or organization and that a user may belong to or be involved in one or more fields of work or teams. That is, the second category 212 may be a category that enables the user to select a specific field of work or team when multiple fields of work or teams exist within a department.

Similar to the aforementioned example of the first category, if necessary, the user may change to another category belonging to the second category (212) by clicking the arrow (212c), and in this case, the item buttons and category names of the third and fourth categories may also be changed accordingly.

In the example of FIG. 6a, the "Field" category 212 may include fields such as Purchasing, Taxation, and Human Resources, and each field may be selected through the item buttons 212a of the second category 212. Furthermore, when a specific field is selected, the project items corresponding to the selected field may be displayed in the third category 213. For example, when selecting the item button 212a for the Purchasing field, the item buttons 213a for projects corresponding to the Purchasing field may be displayed in the third category 213. Additionally, by selecting the "All" button 212a' among the item buttons 212a, all project item buttons 213a, regardless of the field or team, may be displayed in the third category 213.

Furthermore, the second category 212 includes a "Recent" button 212b, and by selecting the "Recent" button 212b, the item buttons 213a for projects that the user recently created or edited schedules for may be displayed in the third category 213. According to an embodiment, in the second category 212, the "Recent" button 212b may be set as the default selection. Setting the "Recent" button 212b as the default takes into account the fact that users of the calendar application are relatively more likely to continuously create or edit schedules for projects they recently worked on.

Additionally, according to another embodiment, in the second category 212, the "All" button 212a' may be set as the default selection. Setting the "All" button 212a' as the default is intended to allow the user to select all project item buttons 213a when the number of project items the user of the calendar application is involved in does not exceed a predetermined number (e.g., 10).

When the "Recent" button 212b or the "All" button 212a' is set as the default in this way, it does not constitute a direct selection of the category (i.e., the second category). However, when the user selects any one (or more) of the multiple recent or all project item buttons displayed in the third category 213 by selecting the "Recent" button 212b or the "All" button 212a', the second category corresponding to the user-selected project item may be naturally selected. That is, through this default setting, the user of the calendar application is effectively considered to have selected the second category 212 without any separate input for the second category 212. As a result, the user may receive category input with minimal input and without feeling any inconvenience.

The third category 213 may be a lower category of the second category 212 and may represent the "Project" category. The items for multiple projects performed within the selected field of work or team by the user may be displayed in the third category 213. For example, if the user selects the item button 212a corresponding to the "Purchasing" field in the second category 212, the third category 213 may display item buttons 213a associated with the "Purchasing" item button 212a. Additionally, if the user selects the "Recent" button 212b or the "All" button 212a' in the second category 212 instead of a button corresponding to a specific field, or if these buttons are set as the default (i.e., the user has not explicitly made a selection for the second category), the item buttons 213a for recently performed projects or all projects may be displayed in the third category 213.

Meanwhile, due to limitations such as the display size of the user device, the display area of the third category 213 within the category selection window 210 may have a limited size. Consequently, only a predetermined number of item buttons 213a (e.g., 10) may be displayed in the display area of the third category 213, and if the remaining item buttons exist, they may be displayed using a scrolling method.

The first category 211, the second category 212, and the third category 213 may collectively be referred to as "context categories." In one embodiment, the first to third categories 211, 212, and 213 have the characteristic of practically showing which context (i.e., type or nature) of category the user is performing a schedule within. By including these context categories, the schedule data of the calendar application's user may be meaningfully categorized. Such categorized schedule data not only enables the user to systematically manage their schedules and plans but also provides the institution the user belongs to or the calendar management server with the significant benefit of generating meaningful statistical data.

Referring again to FIG. 6a, the fourth category 214 may be a lower category of the third category 213 and may represent a "Task" category related to the detailed works the user actually performs. The item buttons 214a of the "Task" category may include, for example, works such as internal approval processing, product proposals, account deposits, product development, and meetings. Due to the area limitations of the display region of the fourth category 214, only a predetermined number of item buttons (e.g., 10) may be displayed, while the remaining item buttons may be displayed using a scrolling method. Additionally, the composition of the item buttons 214a in the fourth category 214 may vary depending on which item button(s) in the third category 213 are selected.

Furthermore, multiple item buttons 214a in the task category may be selected simultaneously by the user. This is because users may perform multiple works simultaneously or sequentially. For example, a user may simultaneously perform works such as "Price Research" and "Data Research," in which case the user may select the two corresponding item buttons at the same time.

The selection of the item buttons 213a and 214a in the aforementioned third category 213 and fourth category 214, respectively, may be carried out in various ways. For instance, users may select the item buttons 213a and 214a through a mouse click (single click or double click) or by dragging and dropping a specific item button into the item display section 223 of the input panel 220.

According to one embodiment, the fourth category 214 may also include a "Recent" button 214c and an "All" button 214b, similar to the second category 212, and may additionally include a "Top 10" button. The "Recent" button 214c may be set as the default selection in the fourth category 214 when the user has not selected any item button in the third category 213 or in similar situations. This is based on the consideration that users of the calendar application are relatively more likely to continuously create or edit schedules for the detailed works they recently worked on.

Additionally, when the "All" button 214b is selected in the fourth category 214, all detailed works present in the fourth category 214 may be displayed as item buttons.

When the "Top 10" button is selected in the fourth category 214, the top 10 (or fewer) most frequently used item buttons among the detailed works in the fourth category 214 associated with the item button selected in the third category 213 (i.e., a specific project) may be displayed.

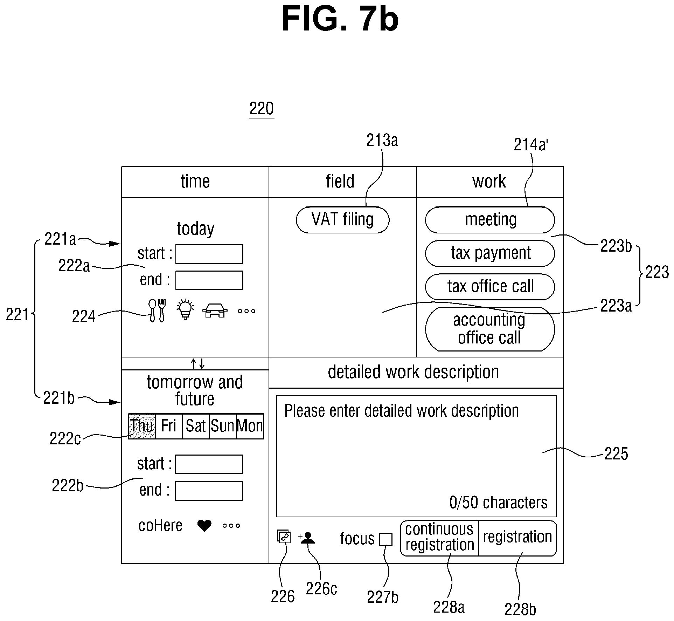

Additionally, according to one embodiment, when an item button corresponding to a work requiring communication with other users, such as "Meeting," is selected from the item buttons in the fourth category 214, a person icon (e.g., see reference number 226c in FIG. 7b) for adding other users associated with the "Meeting" may be added to a certain area of the input panel 220. This will be described in more detail later.

FIGS. 6b and 6c are diagrams illustrating additional usage examples of the category selection window in the calendar application according to an embodiment of the present disclosure.

Referring to FIG. 6b, the user may remove unnecessary item buttons 213a or 214a from the category selection window 210. For example, when the user clicks and holds the mouse button while dragging an item button 214a displayed in the category selection window 210 that they wish to remove (e.g., the "Annual Contract Proposal" item button in the fourth category in the example of FIG. 6a), a delete button 208, such as a trash bin icon, may appear at the bottom of the category selection window 210. By dragging the item button 214a and dropping it on or near the delete button 208, the item button 214a may be removed. The removable item buttons 213a or 214a may belong to the third category and/or the fourth category, but they are not limited thereto.

Referring to FIG. 6c, the user may drag an item button 213a or 214a displayed in the category selection window 210 and drop it, for example, onto a search icon 209 displayed at the top of the category selection window 210. By doing so, the user may search for the history of schedules performed for the selected item button 213a or 214a. For example, in the case of FIG. 6b, when the item button 213a of the third category labeled "Incheon High School" is dragged and dropped onto the search icon 209, as shown on the right, the history of schedules 218 related to "Incheon High School" that the user has performed so far may be retrieved and displayed. This schedule history 218 that the user has performed not only allows the user to quickly grasp their own performance history for specific works at a glance but also enables the institution to obtain meaningful statistical data regarding project performance, individual user productivity, and efficiency.

As described above, the category selection window 210 according to an embodiment of the present disclosure may provide a method that enables effective category input while minimizing the process of the user spending time directly selecting categories. According to one embodiment, the user of the calendar application may input all four categories by performing only one or two actions, such as selecting item buttons related to their schedule in the third category and/or the fourth category, out of the four total categories. Furthermore, the category input method using the category selection window 210 may synergize with the category input via the item display section of the input panel 220, which will be described later, enabling the user's category input to be carried out more easily.

### Input Panel

Referring again to FIG. 2, the main window 215 of the user interface for the calendar application according to an embodiment of the present disclosure may include an input panel 220 for receiving inputs such as time and categories for schedules. The position of the input panel 220 may be located approximately in the lower central area of the main screen 200. Specifically, it may be positioned below the timeline 230, to the right of the category selection window 210, and to the left of the schedule display table 240.

In the example of FIG. 2, the goal display section 239 may be located directly below the timeline 230, and the input panel 220 is shown positioned below the goal display section 239. However, its position is not limited thereto, and the location of the input panel may vary depending on the design of the user interface. For example, in another example, the input panel 220 may be presented in the form of a popup window when the user directly inputs schedules through the schedule display table or the timeline. Various modifications are possible, and the position or implementation method of the input panel is not restricted.

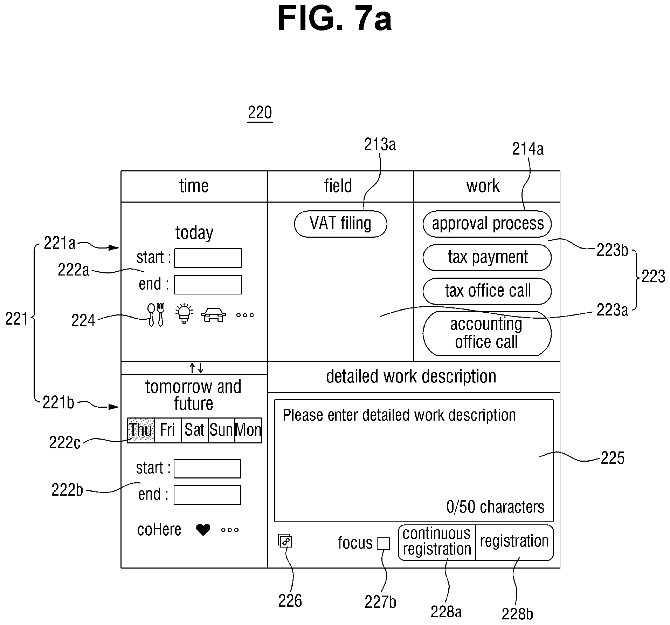

FIG. 7a is a diagram illustrating the input panel 220 according to an embodiment of the present disclosure.

Referring to FIG. 7a, the input panel 220 may include a time input section 221 for entering or editing the time for a schedule; and an item display section 223, which displays item buttons for categories already selected by the user for the schedule and one or more item buttons recommended for the categories by the calendar application, allowing the user to make selections.

Additionally, the input panel 220 according to an embodiment of the present disclosure may include multiple quick buttons 224 for quickly adding repetitive or routine schedules such as meals, recharge (rest), or move; a detailed description input section 225 for entering detailed work information for the schedule; a link creation button 226 for adding attachments or links related to the schedule; an external work button (not shown) for indicating that the schedule is an off-site activity; a focus button 227b for indicating that the schedule requires concentration; a registration button 228b for registering the created schedule; and a consecutive registration button 228a for registering sequential schedules.

For example, the consecutive registration button 228a is a button that, when adding sequential schedules, sets the start time in the time input section 221 to the end time of the previously added schedule after adding a specific schedule, thereby enabling the user to quickly input consecutive schedules. For example, after entering a schedule for 9:00 AM to 9:30 AM and selecting the consecutive registration button 228a, a schedule item for 9:00 AM to 9:30 AM is created, while the time input section 221 automatically updates to 9:30 AM to 10:00AM, allowing the user to conveniently input the subsequent schedule.

The time input section 221 of the input panel 220 according to an embodiment may include a first time input section 221a and a second time input section 221b. The first time input section 221a is for inputting schedules within the first time range, for example, today's schedules, and may include a first time input box 222a that allows the user to input the start time and end time for today's schedule. Additionally, the second time input section 221b is for inputting schedules within the second time range, which follows the first time range, for example, schedules for tomorrow and the future, and it may be positioned below the first time input section 221a. The second time input section 221b may include a second time input box 222b that allows the user to input the start time and end time for the schedules of each date (day of the week) within the second time range. Additionally, the second time input section 221b may include a day-of-the-week selection section 222c that displays the dates for tomorrow and the following days as days of the week. As in the example of FIG. 4, if today is Wednesday, the five days displayed in the day-of-the-week selection section 222c may be Thursday (Thu), Friday (Fri), Saturday (Sat), Sunday (Sun), and Monday (Mon).

However, the time input section 221 of the input panel 220 may be implemented with a single time input section instead of being composed of two separate time input sections. In this case, a single time input section may include both a time input box and a day-of-the-week selection section. However, the specific form of the input panel is not limited.

Referring to FIG. 7a, the input panel 220 may include an item display section 223 that displays the item buttons of categories selected by the user for the schedule or the recommended category item buttons suggested by the calendar application for the schedule, enabling the reception of user selection for categories.

The item display section 223 may include a first item display section 223a and a second item display section 223b. More specifically, the first item display section 223a may display one or more item buttons selected by the user from the item buttons 213a of the third category 213 in the category selection window 210 or up to a predetermined number of recommended item buttons (e.g., up to 5) suggested by the calendar application. Additionally, the second item display section 223b may display one or more item buttons selected by the user from the item buttons 214a of the fourth category 214 in the category selection window 210, or up to a predetermined number of recommended item buttons (e.g., up to 5) suggested by the calendar application.

In a non-limiting example, the recommendation of one or more item buttons in each of the first item display section 223a and the second item display section 223b may be based on the usage frequency of each item button.

In another example, the calendar application may recommend item buttons by comprehensively considering factors such as the usage frequency, time, cycle, ongoing works, and projects of each item button within the categories through an artificial neural network module. Examples of such an artificial neural network module will be described later.

FIG. 7b is a diagram illustrating an additional usage example of the input panel according to an embodiment of the present disclosure. Referring to FIG. 7a, when an item button corresponding to a work requiring communication with other users, such as "Meeting," is selected from the item buttons in the fourth category 214, a person icon 226c for adding other users may be added to a certain area of the input panel 220. If the user selects the person icon 226c, a user interface allowing the addition of other users who attended or are scheduled to attend the meeting may be displayed. Through this user interface, the user may add other users associated with the meeting, and the added users may be viewable through the schedule boxes 231a and 231b on the timeline 230 or the schedule items 241 in the schedule display table 240.

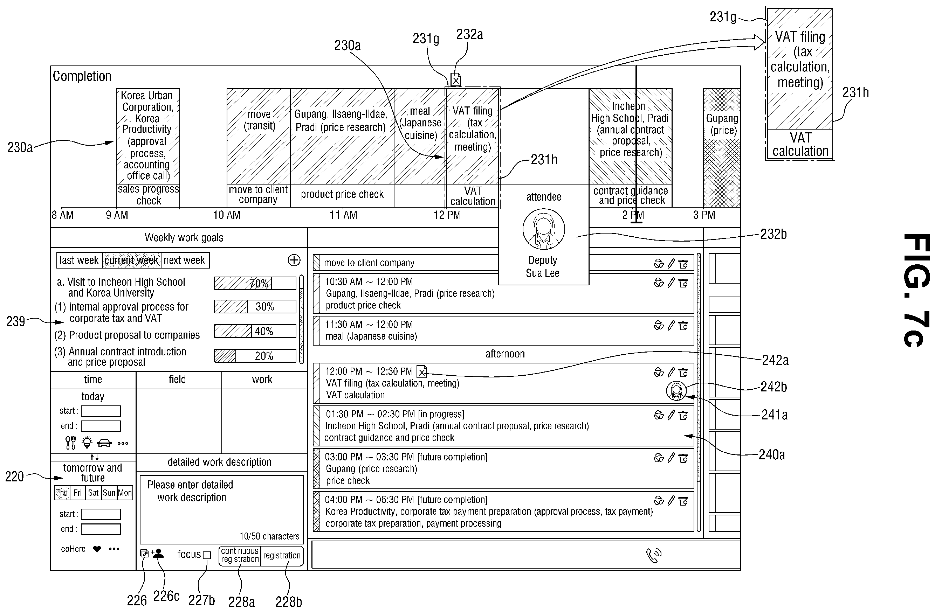

FIG. 7c is a diagram illustrating a user interface in which counterparts for a schedule and attached files have been added, according to an embodiment of the present disclosure.

Referring to FIG. 7c, when the user selects the counterpart addition icon 226c through the input panel 220 of the calendar application and selects and adds other users associated with the schedule via the user interface, the addition of these users may be displayed through the schedule boxes 231a or 231b on the timeline 230 and the schedule items 241a or 241b in the schedule display table 240.

Specifically, when the user selects the counterpart addition icon 226c and selects and adds other users associated with the schedule, a first identifier 231h, indicating the presence of other users associated with the schedule, may be generated in the schedule box 231a or 231b on the timeline 230. For example, the first identifier 231h may be generated in the bottom-right corner of the first area (colored area) of the schedule box 231a. Furthermore, when the user interacts with the schedule box 231a (e.g., by hovering the mouse cursor, mouse clicking, or touching), a first popup window 232b may be displayed adjacent to the schedule box 231a. This first popup window 232b may display information such as the photos and names of other users associated with the schedule, allowing the user to confirm these other users.

Additionally, when the user selects the counterpart addition icon 226c and selects and adds other users associated with the schedule, the photos 242b of the other users associated with the schedule may be displayed in the schedule items 241a or 241b in the schedule display table 240. The photos 242b of these other users may be displayed in the bottom-right area of the schedule item 241a, but the display position is not limited thereto.

Additionally, when the user selects the link creation button 226 through the input panel 220 of the calendar application, a separate user interface may be displayed, allowing the user to select and add attachments or links. When the user adds attachments or links associated with a schedule, a second identifier 231g, indicating the presence of attachments or links associated with the schedule, may be generated in the schedule box 231a or 231b on the timeline 230. The second identifier 231g may, for example, be generated in the top-left corner of the first area (colored area) of the schedule box 231a. Additionally, when the user interacts with the schedule box 231a or the second identifier 231g (e.g., by hovering the mouse cursor, mouse clicking, or touching), a second popup window 232a may be displayed adjacent to the schedule box 231a. This second popup window 232a may display an identifier (e.g., an icon representing the type of attachment) for the attachment or link associated with the schedule.

Additionally, when the user selects the link creation button 226 through the input panel 220 of the calendar application to add attachments or links associated with a schedule, an identifier 242a for the attachment or link associated with the schedule may be displayed in the schedule items 241a or 241b in the schedule display table 240. This identifier 242a for the attachment or link may be displayed to the right of the time range display of the schedule item 241a, but its display position is not limited thereto.

In this way, the user may easily add other users or attachments associated with a schedule through the counterpart addition icon 226c and the link creation button 226 in the input panel. Additionally, the user may easily identify information about other users associated with each schedule and/or attachments through the user interface of the calendar application, thereby improving the user's work efficiency. Furthermore, when the categories of schedules, counterpart-related information, attachments, and other data entered by the user are set to be shared with the institution's administrators or other users within the department, such information may contribute to improving the overall work efficiency of the institution or department.

Meanwhile, the user may also remove unnecessary item buttons from the input panel 220. For example, when the user double-clicks an item button displayed in the first item display section 223a or the second item display section 223b of the input panel 220 that they wish to remove, the corresponding item button may be removed.

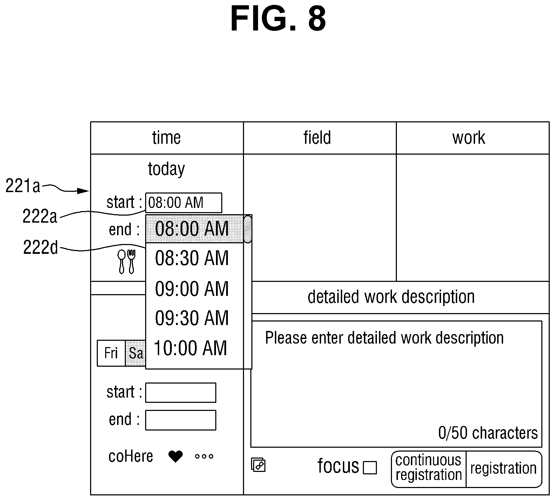

FIG. 8 is an exemplary diagram illustrating a method for entering time through the time input section 221 according to an embodiment of the present disclosure.

Referring to FIG. 8, the first time input box 222a of the time input section 221 may include a start time box and an end time box. When the user clicks/touches or hovers over the start time box of the first time input box 222a, a scrollable drop-down box 222d displaying time in 30-minute intervals may be presented. The user may then select any one of the 30-minute intervals from the drop-down box 222d. When a time is selected for the start time box, the end time box may automatically be populated with a time that is 30 minutes after the time entered in the start time box. If the user wants to change the time in the end time box, they may click/touch or hover over the end time box and select the desired time through the drop-down box. Input for the second time input box 222b may also be performed in the same manner.

Dividing time into 30-minute intervals in this way is intended to improve work efficiency by encouraging users to perform works divided into 30-minute time intervals, rather than having users directly input specific times. However, depending on the implementation of the calendar application, time may be presented in 1-hour intervals, 15-minute intervals, or other time units rather than 30-minute time intervals. Additionally, variations such as combining the drop-down box with a method that allows users to directly input times are also possible, and these implementations are not limited thereto.

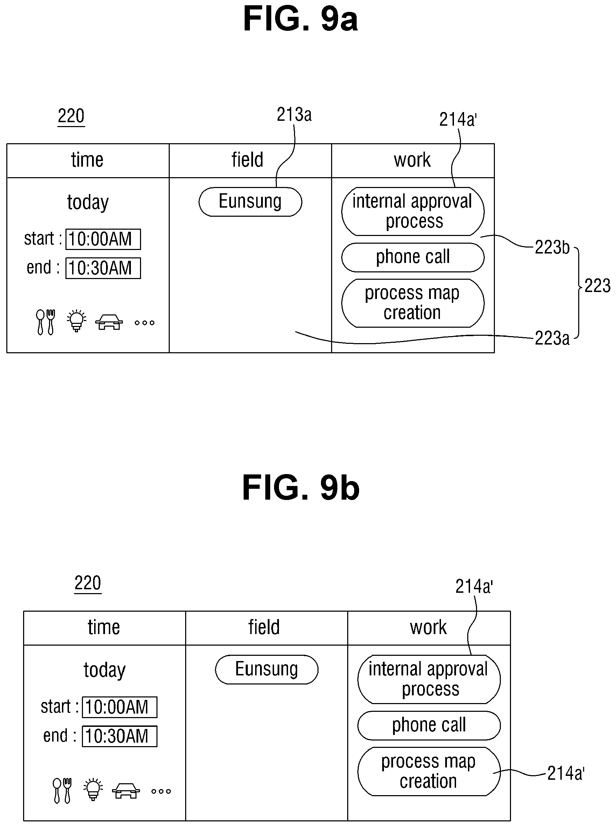

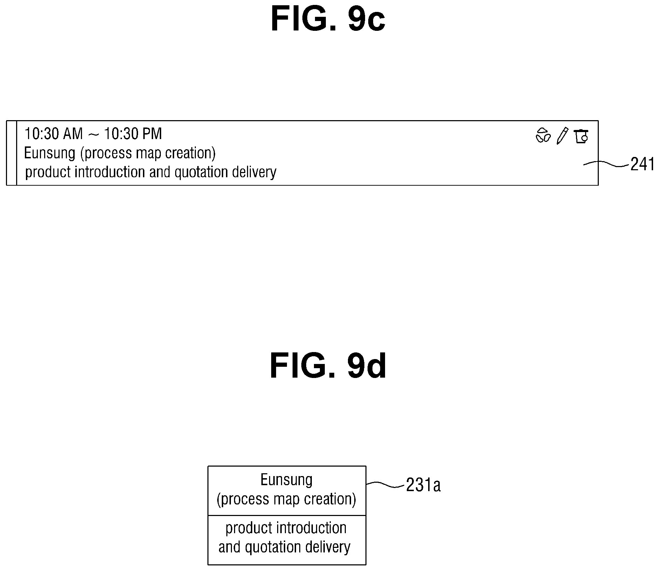

FIGS. 9a, 9b, 9c, and 9d are diagrams illustrating, by way of example, the operation method of the item display section in the input panel of the calendar application according to an embodiment of the present disclosure.

Referring to FIG. 9a, when the user of the calendar application selects one or more item buttons 213a within the third category 213 of the category selection window 210, the selected one or more item buttons 213a of the third category 213 may also be displayed in the first item display section 223a of the input panel 220.

However, if the user does not select any item button in the third category 213 within the category selection window 210, at least some of the default item buttons (e.g., the item buttons of the third category that were recently selected if the "Recent" button is set as the default) may be displayed in the first item display section 223a of the input panel 220.

In the second item display section 223b of the input panel 220, one or more item buttons 214a of the fourth category associated with one or more item buttons 213a displayed in the first item display section 223a may be displayed. At this time, the calendar application may display, as recommended item buttons in the second item display section 223b, item buttons 214a corresponding to works of the fourth category associated with the item button 213a, among which a predetermined number (e.g., up to 5) of works with high usage frequency are selected.

Specifically, as illustrated in the example of FIG. 9a, the first item display section 223a of the input panel 220 may display an item button for a project selected by the user, such as "EunSung" (i.e., the third category). Additionally, the user may input a time range, such as 10:00 AM to 10:30 AM, in the time input section.

Next, referring to FIG. 9b, if the user selects one or more recommended item buttons 214a' (i.e., two or more item buttons may also be selected) among recommended item buttons 214a displayed in the second item display section 223b of the input panel 220, inputs schedule-related details into the detailed description input section 225 (although input into the detailed description input section is not necessarily required), and selects the registration button 228b or the consecutive registration button 228a shown in FIG. 7, the schedule may be registered (or modified) and saved.

In the example of FIG. 9b, the user may select one or more item buttons 214a' (e.g., "Process Map Creation") from among the recommended item buttons 214a suggested by the calendar application (e.g., item buttons for each of "Internal Approval Processing," "Phone Call," and "Process Map Creation") in the second item display section 223b. Additionally, the user may input detailed schedule-related descriptions into the detailed description input section 225, such as "Product Introduction and Quotation Delivery."

FIGS. 9c and 9d illustrate examples of schedule items 241 in the schedule display table 240 and schedule boxes 231a on the timeline 230, respectively, which were created through the process exemplified in FIGS. 9a and 9b. As shown in FIG. 9c, the schedule item 241 in the schedule display table 240 may include the schedule's time, category information (i.e., information on the item buttons of each of the third category and the fourth category), and detailed schedule-related descriptions. Additionally, as shown in FIG. 9d, the schedule box 231a on the timeline 230 may also include the schedule's category information (i.e., information on the item buttons of each of the third category and the fourth category) and detailed schedule-related descriptions. The schedule item 241 and the schedule box 231a will be described in more detail later.

Meanwhile, in the examples of FIGS. 9a through 9d, a case was illustrated where the user of the calendar application selected a specific item button 213a from the third category 213 in the category selection window 210. However, there may also be cases where the user does not select any item button from the third category 213. In such cases, the first item display section 223a may display recently used item buttons or all item buttons based on the default settings, or up to a certain number (e.g., up to 5) of item buttons 213a from the third category, recommended by the calendar application based on usage frequency, may be displayed. Then, if a selection of one of the item buttons 213a in the third category is received from the user, the processes described in FIGS. 9a through 9d may be performed.

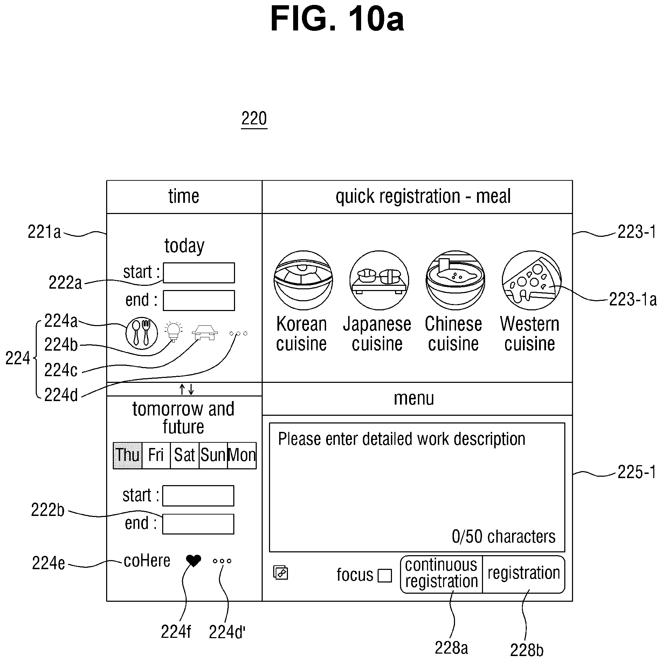

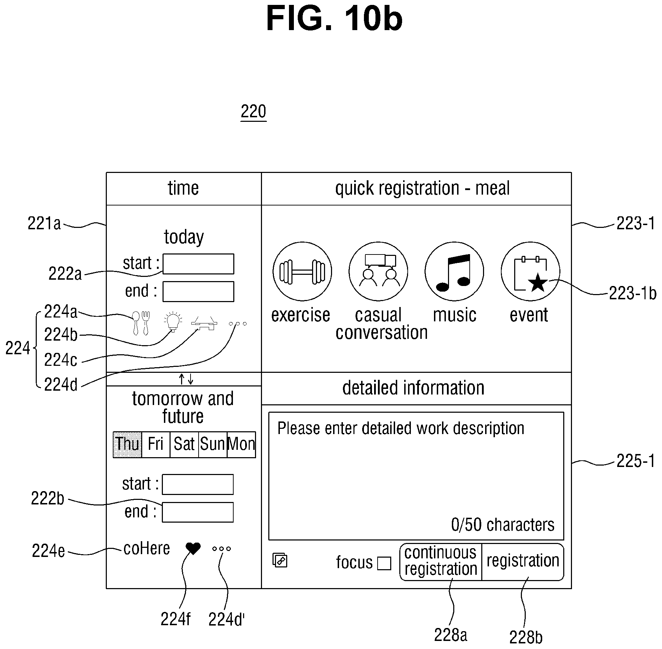

FIGS. 10a and 10b are diagrams illustrating exemplary usage methods of the quick buttons in the input panel of the user interface of the calendar application according to an embodiment of the present disclosure.

Referring to FIGS. 10a and 10b, the quick buttons 224 of the input panel 220 may include a first quick button 224a, a second quick button 224b, a third quick button 224c, and a first extended quick button 224d located below the first time input box 222a of the first time input section 221a, as well as a fourth quick button 224e, a fifth quick button 224f, and a second extended quick button 224d' located below the second time input section 222b. However, the number and arrangement of the quick buttons are not limited.

In the examples of FIGS. 10a and 10b, the first quick button 224a is a quick button related to meals, the second quick button 224b is a quick button related to recharging (rest), the third quick button 224c is a quick button related to move, and the extended quick button 224d may be a quick button for displaying the fourth quick button 224e and the fifth quick button 224f in the item display section 223-1. Additionally, the fourth quick button 224e may be a quick button related to specific products (e.g., time spent by an individual writing on the coHere application), and the fifth quick button 224f may be a quick button related to entertainment. The second extended quick button 224d' may be a quick button for displaying the first quick button 224a, the second quick button 224b, the third quick button 224c, and so on in the item display section 223-1. However, the functions of the quick buttons may vary depending on the implementation of the calendar application, and they are not limited thereto.

The example in FIG. 10a illustrates a case where the first quick button 224a related to meals is selected from the quick buttons 224. When the first quick button 224a related to meals is selected, the first quick button 224a may be highlighted (e.g., colored and surrounded by a circle), and the item display section 223-1 may display buttons 223-1a corresponding to the first quick button 224a. For instance, buttons for Korean cuisine, Japanese cuisine, Chinese cuisine, and Western cuisine may be displayed. Additionally, the name of the item display section 223-1 may be changed to a name corresponding to the first quick button, such as "Quick Registration - Meal," and the name of the detailed description input section 225-1 may also be changed to "Menu" to encourage the user to add descriptions related to meals. For example, the user may easily register a schedule related to meals by inputting a time in the time input section 222a of the input panel, selecting the first quick button 244a related to meals, selecting the Korean cuisine button, and then selecting the registration button 228b.

The example in FIG. 10b illustrates a case where the fifth quick button 224f related to entertainment is selected from the quick buttons 224. When the fifth quick button 224f related to entertainment is selected, the fifth quick button 224f may be highlighted (e.g., colored and surrounded by a circle), and the item display section 223-1 may display buttons 223-1b corresponding to the fifth quick button 224f. For instance, buttons for exercise, casual conversation, music, and events may be displayed. Additionally, the name of the item display section 223-1 may also be changed to a name corresponding to the fifth quick button, such as "Quick Registration - Entertainment." For example, the user may easily register a schedule related to entertainment by inputting a time in the time input section 222a of the input panel, selecting the fifth quick button 244f related to entertainment, selecting the event button, and then selecting the registration button 228b.

The introduction of such quick buttons 224 is one of the various factors that allow the calendar application according to the present disclosure to have a clear distinction from existing calendar applications. In existing calendar applications, the process of adding schedules is cumbersome, making it very rare for users to continuously add repetitive or routine schedules. In contrast, the calendar application according to the present invention achieves a remarkable effect by introducing quick buttons 224, allowing users to quickly add repetitive or routine schedules through a simple and intuitive process involving only 1 or 2 selections. Furthermore, the introduction of such quick buttons 224 becomes a critical factor that enables users to continuously (or effectively without gaps) create their daily schedules (i.e., timeline).

### Schedule Display Table

Referring to FIG. 2, in the user interface of the calendar application according to an embodiment of the present disclosure, a schedule display table 240 may be positioned to the right of the input panel 220 and the goal display section 239. The schedule display table 240 may display at least some of the schedules for the first time range (e.g., today) and the second time range thereafter (e.g., tomorrow and the future) in a table format.

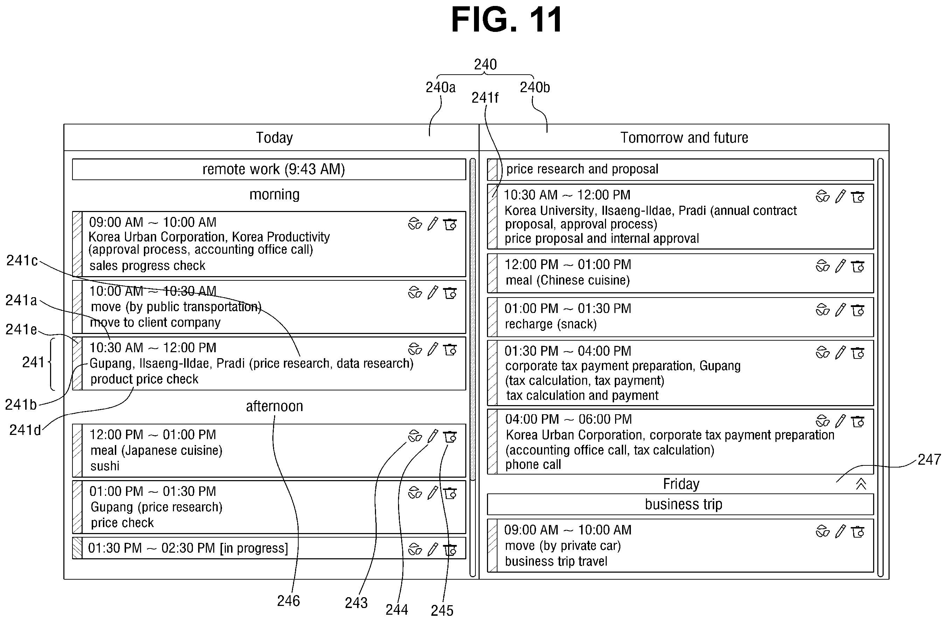

FIG. 11 is a diagram illustrating the schedule display table 240 in the user interface of the calendar application according to an embodiment of the present disclosure.

In the example of FIG. 11, the schedule display table 240 may include a first schedule display table 240a for displaying today's schedules in chronological order from top to bottom, and a second schedule display table 240b for displaying tomorrow's and future schedules in chronological order from top to bottom. The first schedule display table 240a and the second schedule display table 240b each include one or more schedule items 241, which, as previously described, may be input by the user through the input panel 220.

Unlike conventional calendar applications, which typically display only schedule title and time for each schedule item, the schedule item 241 according to an embodiment of the present disclosure may include information such as the start and end times of the schedule 241a, the third category of the schedule 241b (e.g., project), the fourth category of the schedule 241c (e.g., work), and the detailed description of the schedule 241d. As previously described, the information of such schedule items 241 may be effectively input while minimizing the process of the user spending time directly selecting them through the category selection window 210 and the input panel 220.

In a non-limiting example, among the schedule items in the first schedule display table 240a, the schedule items prior to the current time may correspond to completed schedules already performed by the user. In this way, schedule items corresponding to completed schedules may include an identifier (e.g., a label, flag, etc.) 241e in a first color (e.g., blue) in the left area of the schedule item 241.

Among the schedule items in the first schedule display table 240a, schedule items currently in progress at the current time may include an identifier in a third color (e.g., green) in the left area of the schedule item.

Additionally, among the schedule items in the first schedule display table 240a, the schedule items corresponding to schedules after the current time may pertain to planned schedules that the user is scheduled to perform in the future. The schedule items for such planned schedules may include an identifier 241f in a second color (e.g., purple) that is different from the first color or the third color, in the left area of the schedule item 241.

The schedule items in the second schedule display table 240b pertain to schedules for tomorrow and the future (i.e., the second time range) and may therefore correspond to planned schedules that the user is scheduled to perform in the future. These schedule items in the second schedule display table 240b may also include an identifier 241f in a second color (e.g., purple), different from the first color, on the left side of the schedule item. However, the identifiers 241e and 241f may be distinguished by methods other than color, such as using icons or other means, and are not limited thereto.

Furthermore, the first schedule display table 240a may include a "Work Information Identifier" indicating the work start time and location, a "Morning Identifier" representing the morning, and an "Afternoon Identifier" 246 distinguishing between the morning and the afternoon, placed between the schedule items. Additionally, the second schedule display table 240b may include identifiers 247 for the days-of-the week of tomorrow or subsequent days placed between the schedule items, allowing the user to easily grasp their schedules.

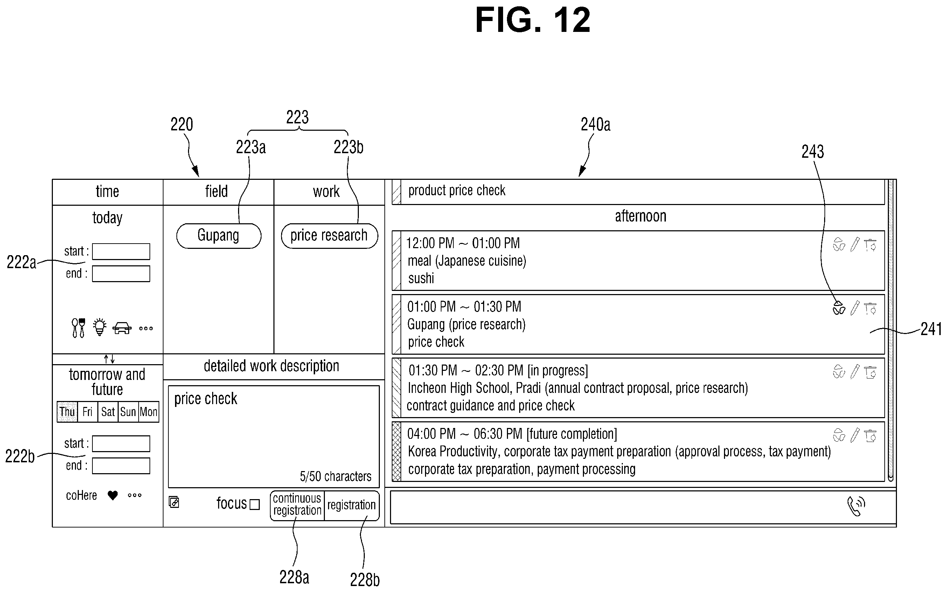

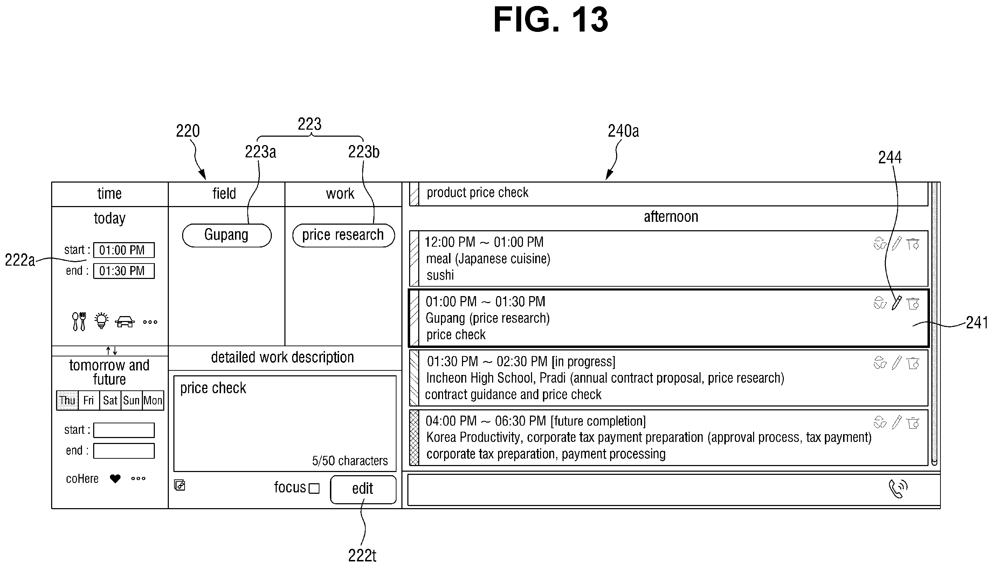

Furthermore, each schedule item 241 in the schedule display table 240 according to an embodiment of the present disclosure may include a recycle button 243, an edit button 244, and a delete button 245 in the top-right corner. Among these, the delete button 245 may be used to delete the corresponding schedule item 241 to which the delete button 245 belongs. The usage methods of the recycle button 243 and the edit button 244 will be described below with reference to FIGS. 12 and 13.

FIG. 12 is an exemplary diagram illustrating a method for adding a schedule using a recycle button of the schedule items according to an embodiment of the present disclosure.

Referring to FIG. 12, the recycle button 243 may be used when the user wants to add a schedule while retaining the category information or detailed description information of the corresponding schedule item 241 to which the recycle button 243 belongs, but changing only the time. When the recycle button 243 is selected, the same category information (e.g., the third category and the fourth category) and detailed schedule description information as the schedule item 241 to which the recycle button 243 belongs are automatically entered into the item display section 223 of the input panel 220. Additionally, if the schedule item 241 is linked to an attachment, information about the attachment is associated with the link creation button 226. If the schedule pertains to a meeting, information about other users who attended the meeting is associated with the person icon 226c (see FIG. 7a) and is automatically entered. Only the time information 222a or 222b remains empty and unfilled. Thus, the user may quickly and easily register a new schedule by simply entering the time information 222a or 222b for the schedule and then selecting the registration button.

FIG. 13 is an exemplary diagram illustrating a method for adding a schedule using the edit button of the schedule items according to an embodiment of the present disclosure.

Referring to FIG. 13, the edit button 244 may be used when the user wants to modify the category, time, detailed schedule information, or other details of the schedule item 241 to which the edit button 244 belongs. When the edit button 244 is selected, the category information (e.g., the third category to the fourth category), time information, and detailed schedule information of the schedule item 241 to which the edit button 244 belongs are automatically entered into the item display section 223 of the input panel 220. The user may then modify some of this information and simply press the edit button 222t to complete the editing of the schedule item.

By including category-related information in each schedule item, distinguishing schedule items for completed schedules, schedules currently in progress, and planned schedules using identifiers of different colors, enabling users to quickly and easily register schedule items using existing schedule items, and allowing schedule items to be quickly and easily edited or deleted, the calendar application enables users to systematically and effortlessly manage and grasp their schedules. Furthermore, such systematic and convenient schedule management may ultimately improve the user's work efficiency and serve as a motivation for the user to actively utilize schedule management through the calendar application.

### Timeline

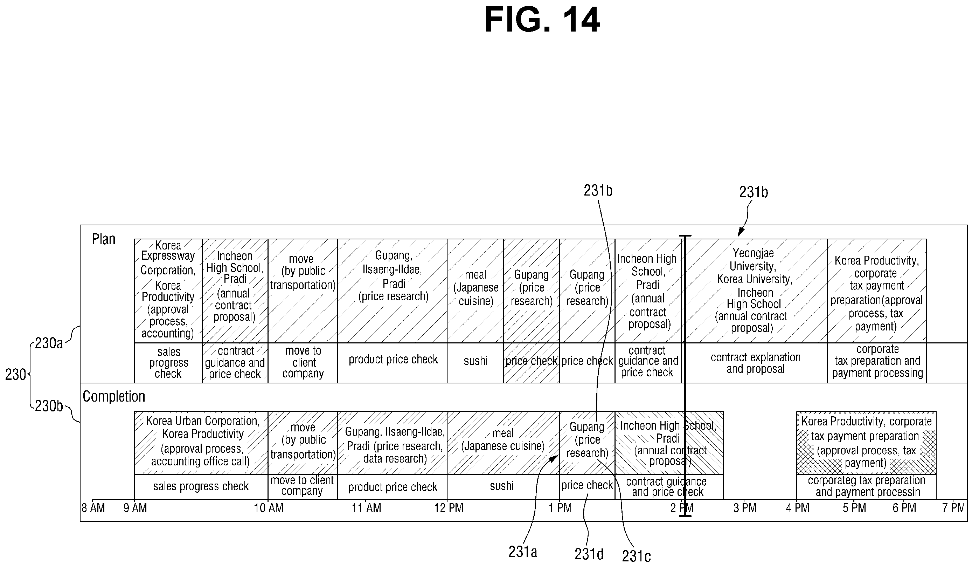

FIG. 14 is a diagram illustrating the timeline 230 of the user interface of the calendar application according to an embodiment of the present disclosure. The timeline 230 may display completed schedules and planned schedules within the first time range (e.g., today) in chronological order in the form of schedule boxes 231a and 231b.

According to one embodiment, the timeline may be configured to display schedule boxes for the time range within the first time range, specifically from 8 AM to 7 PM on the day referred to as today. However, this time range may vary depending on the user of the calendar application or the implementation of the calendar application.

Additionally, in one embodiment, if the user of the calendar application selects "Overtime Mode," the time range displayed on the timeline may be extended from 8 AM to 12 AM. The selection of such "Overtime Mode" may be made, for instance, through a popup window generated after the user selects the end-of-work button 247 on the main screen 200 of FIG. 2, but it is not limited thereto.

Referring to FIG. 14, the timeline 230 for today, according to an embodiment of the present disclosure, may include a first timeline 230a that displays schedule boxes 231a for one or more completed schedules of the user for today in chronological order from left to right, and a second timeline 230b that displays schedule boxes 231b for one or more planned schedules of the user for today in chronological order from left to right. According to another embodiment, the timeline 230 may display only the first timeline 230a, or it may display both timelines, with the second timeline 230b in a folded state (e.g., see the timeline in FIG. 5a). The specific display method of the timeline is not limited thereto.

The schedule boxes 231a for one or more completed schedules of the user for today, displayed on the first timeline 230a, may be those entered by the user on the same day. Such user input may be made through the input panel 220 and/or the category selection window 210, as described above. The addition of schedule boxes 231a in the first timeline 230a may be at least partially synchronized with the addition of schedule items 241 in the first schedule display table 240a within the schedule display table 240.

Each schedule box 231a in the first timeline 230a may include a first area for displaying the third category 231b of the schedule (e.g., project) and the fourth category 231c of the schedule (e.g., work), as well as a second area for displaying detailed description information 231d of the schedule. The first area of the schedule box 231a in the first timeline 230a has a first color (e.g., blue) that identifies the schedule as a completed schedule of the user. This first color may be the same as the first color of the identifier 241e of the schedule item 241 in the aforementioned first schedule display table 240a.

The schedule boxes 231b for one or more planned schedules of the user for today, displayed on the second timeline 230b, may be schedules that the user entered before the current time. The schedule boxes 231b for the user's planned schedules generally have the same or a similar structure as the schedule boxes 231a. However, the first area displaying the third category and the fourth category of the planned schedule may have a second color (e.g., purple) different from the color of the schedule boxes 231a. This second color may be the same as the second color of the identifier 241f of the schedule items in the second schedule display table 240b.

Additionally, the timeline 230 may include a vertical time axis 237 that indicates the current time. This vertical time axis 237 may be displayed crossing both the first timeline 230a and the second timeline 230b. The vertical time axis 237 may operate to gradually move to the right as time progresses. The schedule box 231a in the first timeline 230a that overlaps with the vertical time axis 237 may have a third color (e.g., green) different from the first and second colors. This third color may be the same as the third color of the schedule item currently in progress in the first schedule display table 240a, as previously mentioned.

In this way, the calendar application of the present disclosure aligns the color of the schedule boxes 231a in the first timeline 230a with the color of the identifiers 241e of the schedule items 241 in the first schedule display table 240a, and the color of the schedule boxes 231b in the second timeline 230b with the color of the identifiers 241f of the schedule items 241 in the second schedule display table 240b. By also distinguishing the color of schedules currently in progress, the application enables the user to easily and visually identify and distinguish completed schedules, planned schedules, and schedules in progress on both the timeline and the schedule display table through the use of color.

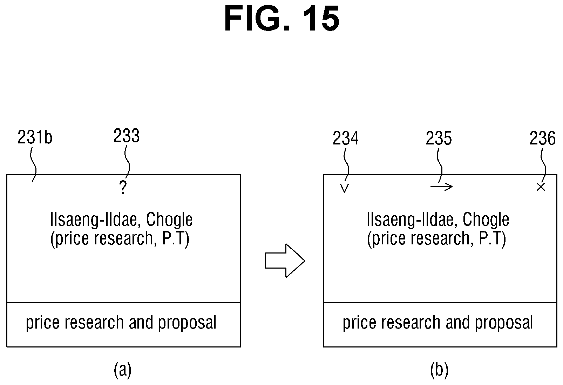

FIG. 15 is an exemplary diagram illustrating a process for determining the status of a schedule box for a planned schedule in the second timeline according to an embodiment of the present disclosure.

Referring to FIG. 15(a), according to one embodiment, when the current time has passed for a schedule box 231b corresponding to a specific planned schedule displayed in the second timeline 230b, the calendar application may prompt the user to determine the status of the schedule box 231b for the corresponding planned schedule. Such a prompt may be provided by displaying a prompt icon 233 (e.g., a question mark) at the top of the schedule box 231b.

Referring to FIG. 15(b), when the user hovers the cursor or touches the schedule box 231b for a planned schedule that is past the current time (i.e., for which time has elapsed), the prompt icon 233 (e.g., a question mark) previously displayed at the top of the schedule box 231b may disappear, and the adopt icon 234, defer icon 235, and cancel icon 236 may be displayed. The user may select one of the three icons 234, 235, or 236 based on the current status of the planned schedule.

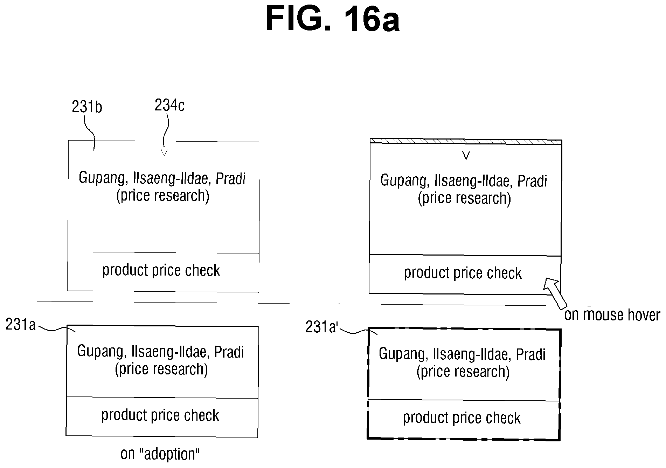

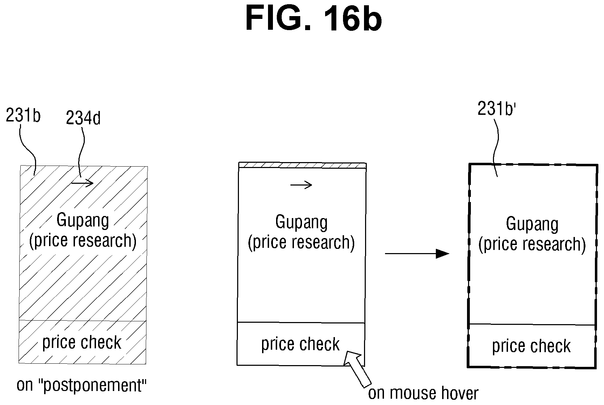

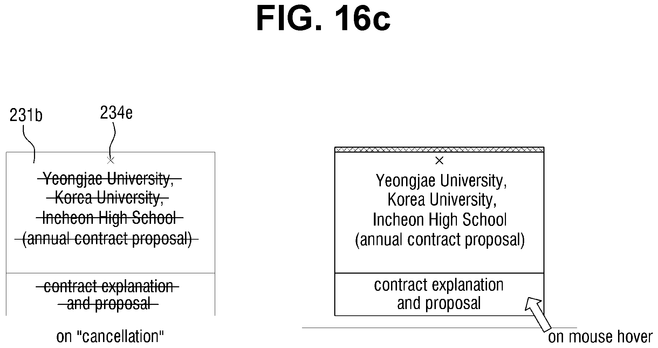

FIGS. 16a, 16b, and 16c are exemplary diagrams illustrating the cases where the user selects the adopt icon, defer icon, and cancel icon for the schedule box of a planned schedule prior to the current time, respectively.

Referring to FIG. 16a, when the user selects the adopt icon 234 for the schedule box 231b of a planned schedule prior to the current time, the schedule box 231b is displayed with a fade effect, and the adopt icon (e.g., a check mark) 234c may be displayed at the top center of the schedule box 231b. Additionally, when the mouse hovers over (or a touch is performed on) the schedule box 231b where the adopt icon 234c has been selected, the schedule box 231b may be displayed prominently along with a color label in the first color at the top. At the same time, the schedule box 231a for the corresponding completed schedule may be highlighted so that it can be recognized to which completed schedule among the completed schedules of the first timeline 230a the adopted planned schedule corresponds.

Referring to FIG. 16b, when the user selects the defer icon 235 for the schedule box 231b of a planned schedule prior to the current time, the schedule box 231b for the planned schedule may be displayed with a fade and hashed pattern, and the defer icon (e.g., a rightward arrow) 234d may be displayed at the top center of the schedule box 231b. Additionally, when the mouse hovers over (or a touch is performed on) the schedule box 231b where the defer icon has been selected, the schedule box 231b may be displayed prominently along with a color label in a second color (different from the first color) at the top. At the same time, the deferred planned schedule may be displayed as a separate highlighted schedule box at the rightmost end of the second timeline 230b.

Additionally, referring to FIG. 16c, when the user selects the cancel icon 236 for the schedule box 231b of a planned schedule prior to the current time, the schedule box 231b for the canceled planned schedule may be displayed with a fade effect and a strikethrough applied to the text, and a cancel icon (e.g., "X") 234e may be displayed at the top center of the schedule box 231b. Additionally, when the mouse hovers over (or a touch is performed on) the schedule box 231b where the cancel icon has been selected, the schedule box 231b may be displayed prominently along with a color label in a third color (different from the first color and the second color) at the top.

As described above, according to an embodiment of the present disclosure, through the process of determining the status of the schedule box for a planned schedule in the second timeline as described above, the user may easily identify whether their planned schedule has actually been performed, deferred, or canceled. Furthermore, data regarding the execution status of planned schedules may be effectively collected, allowing it to be utilized as meaningful statistical data by the calendar management server and/or the institution server.

### A method of Inputting Categorized Schedules

According to an embodiment of the present disclosure, in the calendar application, the user may input a categorized schedule using at least one of the category selection window, input panel, timeline, or schedule display table. Hereinafter, a detailed method for this process will be described.

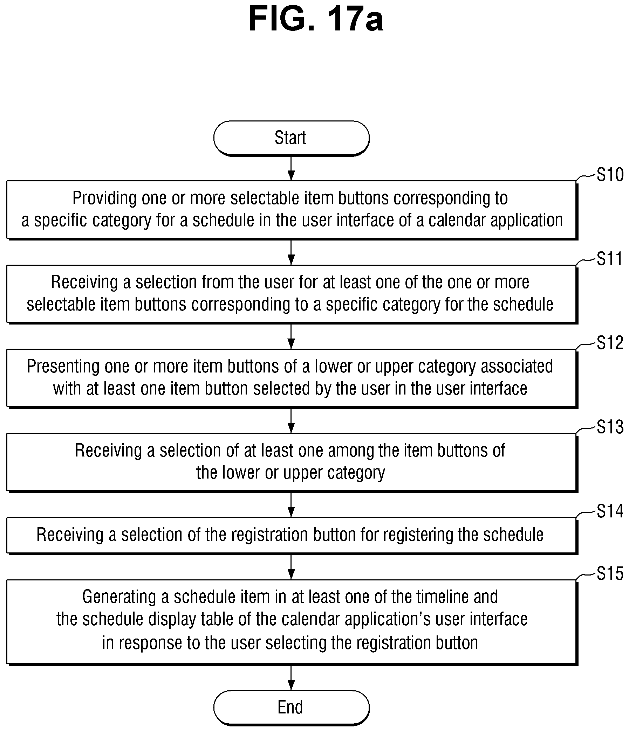

FIG. 17a is a flowchart illustrating a method of inputting categorized schedules through the calendar application according to an embodiment of the present disclosure.

Referring to FIG. 17a, in step S10, the calendar application may provide one or more selectable item buttons corresponding to a specific category for a schedule in the user interface. According to one embodiment, the one or more selectable item buttons corresponding to a specific category for the schedule may be provided in at least one of the category selection window 210 and the input panel 220.

According to an embodiment of the present disclosure, as illustrated in FIG. 6, the calendar application may be configured to allow the input of four categories for a schedule. In the example of FIG. 6, the category selection window 210 may provide an item button 211b for the first category 211, one or more item buttons 212a, 212a', 212b, and 212c for the second category 212, one or more item buttons 213a for the third category 213, and one or more item buttons 214a for the fourth category 214. For example, the first category may be a department category, the second category may be a category for classifying fields or teams, the third category may be a category for classifying projects, and the fourth category may be a category for classifying works.

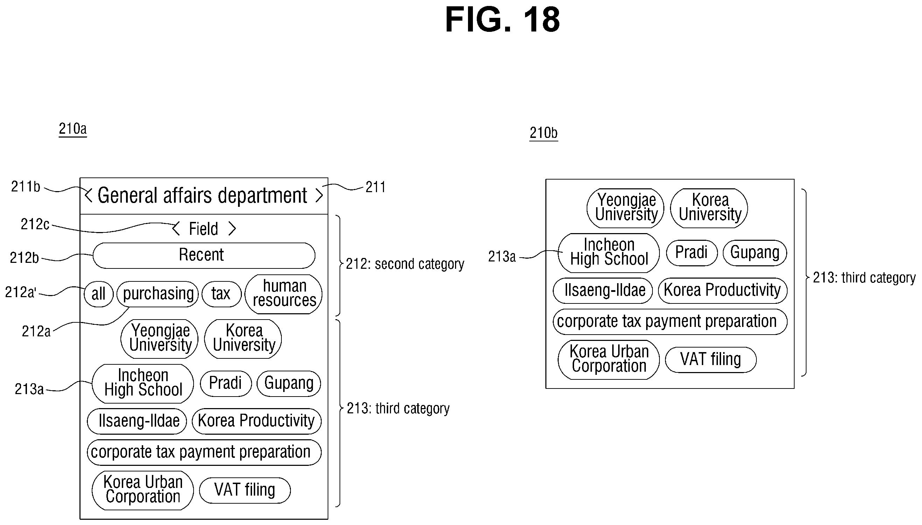

However, referring to FIG. 18, which illustrates examples of category selection windows 210a and 210b in the calendar application according to other embodiments of the present disclosure, the category selection window 210a may include only the item buttons for the first to third categories 211, 212, and 213, while the category selection window 210b may include only the item buttons 213a for the third category 213. The configuration of such a category selection window 210b may vary depending on the environment of the user device (e.g., in mobile devices such as smartphones, where display space is limited, only item buttons for some categories may be displayed) or on the design of the calendar management server or institution server, and is not limited thereto.

Meanwhile, according to one embodiment, in step S10, the one or more selectable item buttons provided in the user interface of the calendar application may be one or more item buttons recently used by the user (i.e., when the default setting is the "Recent" item button) or all item buttons of a specific category (i.e., when the default setting is the "All" item button).

In step S11, a selection may be received from the user for at least one of the one or more selectable item buttons corresponding to a specific category for the schedule, which are provided in the user interface. That is, if necessary, the user may select two or more item buttons simultaneously, allowing flexible input of categories for the schedule.

In step S12, one or more item buttons of a lower or upper category associated with at least one item button selected by the user may be presented in the user interface. As a non-limiting example, when the user selects one of the item buttons provided in the category selection window 210, the item buttons of the lower or upper category associated with the selected category of the item button may be presented in a certain area of the category selection window 210 and/or in a certain area of the input panel 220 (e.g., the item display section 223).

Alternatively, if the user has selected one of the item buttons provided in the category selection window 210, but no user selection has been made for an upper category, the item buttons of the upper category associated with the category of the selected item button may be presented in a certain area of the category selection window 210 and/or a certain area of the input panel 220 (e.g., the item display section 223).

According to one embodiment, one or more item buttons of a lower or upper category may be ranked based on the user's frequency of use and presented in the user interface (e.g., at least one of the category selection window 210 and the input panel 220), or only a predetermined number of item buttons may be recommended and presented in the user interface based on the frequency of use. As will be described later, in another embodiment, recommendations for item buttons may be performed based not on frequency of use but on an artificial neural network module.

Meanwhile, according to a non-limiting example, when the item buttons of a lower or upper category are displayed in both the category selection window 210 and the input panel 220, the number of item buttons presented in the input panel 220 may be smaller than the number of item buttons presented in the category selection window 210. The item buttons presented in the input panel 220 and the category selection window 210 may be a predetermined number of item buttons recommended by the calendar application based on factors such as frequency of use. However, various modifications may be possible regarding the specific method of presenting the item buttons, and the present disclosure is not limited thereto.

As previously described, the calendar application according to an embodiment of the present disclosure may associate two or more categories with a schedule. However, from the user's perspective, manually entering two or more categories for every schedule may feel cumbersome. Accordingly, through step S12, even if the user selects a category, i.e., an item button, for the schedule they intend to enter at least once using at least one of the category selection window 210 and the input panel 220, the calendar application may automatically present or recommend item buttons for lower categories or upper categories associated with the selected item button. This may assist the user in easily performing lower or upper category input.

That is, according to an embodiment of the present disclosure, by the user selecting an item button for a lower category, one or more item buttons for upper categories may be automatically selected or recommended, and conversely, by the user selecting an item button for an upper category, one or more item buttons for lower categories may be automatically selected or recommended.

Each item button presented to the user for selection is associated with one or more item buttons for upper categories. Therefore, when the user selects a specific item button, it is equivalent to selecting not just a single category but also all associated upper categories. Through this, the user may significantly reduce the effort required to manually enter the schedule's categories one by one.

In step S13, a selection of at least one among the item buttons of the lower category may be received from the user.

In step S14, a selection of the registration button for registering the schedule may be received.

In step S15, in response to the user selecting the registration button, a schedule item may be generated in at least one of the timeline and the schedule display table of the calendar application's user interface. The generated schedule item pertains to a categorized schedule that has undergone the category input process (steps S10 to S13).

Through the categorized schedule input method as described above, the calendar application according to embodiments of the present disclosure enables institutions or the calendar management server to collect categorized schedule data from individual users. Such categorized schedule data has a significant qualitative difference compared to general schedule data that is not classified. Particularly, when four categories may be assigned to schedule data, meaningful statistical data may be obtained to effectively grasp not only the work efficiency and work progress status of individual users but also those of an entire institution, organization, or group.

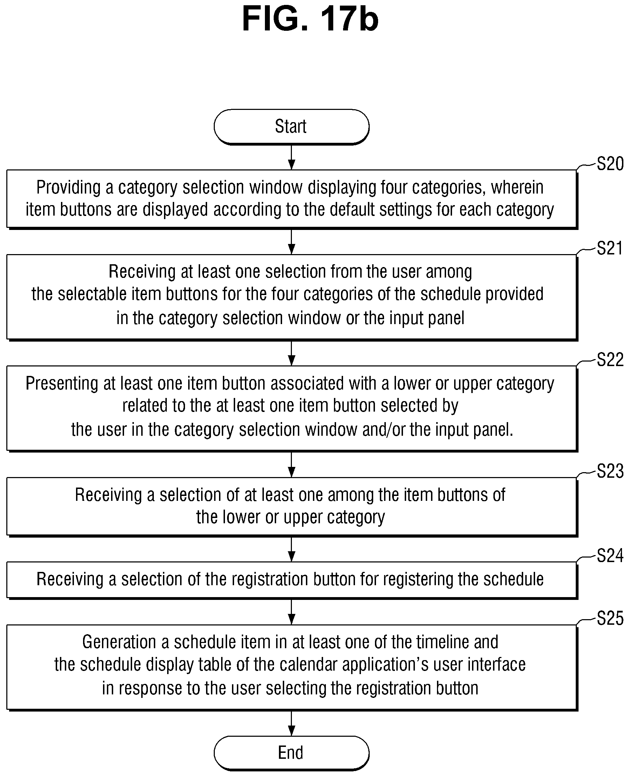

FIG. 17b is a flowchart illustrating a method of inputting a categorized schedule through a calendar application according to another embodiment of the present disclosure. FIG. 17a relates to a case where four categories are associated with a schedule that may be input through the calendar application.

Referring to FIG. 17b, in step S20, a category selection window displaying four categories, as illustrated in FIG. 6, may be provided in the user interface of the calendar application, and item buttons for each category may be displayed in the category selection window according to the default settings for each of the four categories.

Describing in more detail the default settings for each of the four categories associated with the schedule, first, among the four categories, the first category may be a "department" category and may be set by default to the department to which the user currently belongs (e.g., General Affairs Department).

Additionally, the second category may be a "field" or "team" category, and instead of selecting a specific field or team within the second category, the recent button 212b (in FIG. 6) may be set as the default. This is based on the consideration that there is a relatively high likelihood that the user will continue performing works in the field or team where they recently worked. Alternatively, in another example, the "All" button 212a' (in FIG. 6) may be set as the default.

Additionally, the third category may be a "project" category, and if the recent button is set as the default in the second category, one or more item buttons 213a related to the field or team of the most recently performed schedule may be displayed. Alternatively, if the all button is set as the default in the second category, all item buttons 213a of the second category may be displayed.

Furthermore, the fourth category may be a task category, and similarly, if the recent button is set as the default, one or more item buttons 214a corresponding to the works recently performed by the user may be displayed. Alternatively, item buttons corresponding to all works performed by the user may be displayed as an option.

Optionally, in addition to the category selection window, item buttons may also be displayed by default in the first item display section 223a and/or the second item display section 223b of the input panel 220. The item buttons displayed by default in the input panel may be item buttons recommended by the calendar application based on usage frequency or other criteria.

In step S21, at least one selection may be received from the user among the selectable item buttons for the four categories of the schedule provided in the category selection window or the input panel. For example, the user may change the first category in the category selection window or select at least one item button corresponding to a field/team or project in which they wish to enter a schedule from among the second category (field or team category), the third category (project category), and the fourth category (task category).

In step S22, at least one item button associated with a lower category related to the at least one item button selected by the user may be displayed in the category selection window and/or the input panel.

For example, when the user selects an item button of the second category (team or field), the item buttons of the third category, which are related to the team or field corresponding to the selected item button of the second category, may also be displayed on the first item display section of the category selection window and the input panel. Similarly, the item buttons of the fourth category may also be displayed on the second item display section of the category selection window and the input panel accordingly.

As another example, when the user selects an item button in the third category (project), the item buttons in the fourth category, which are associated with the selected item button in the third category, may also be displayed in at least one of the category selection window and the second item display section of the input panel accordingly.

Meanwhile, according to one embodiment, one or more item buttons in the lower category may be ranked based on the user's usage frequency and displayed in the category selection window and/or the input panel, or only a predetermined number of item buttons may be displayed based on the usage frequency. Additionally, in another example, recommendations for item buttons may be performed based on an artificial neural network module rather than usage frequency.

Meanwhile, according to a non-limiting example, when the item buttons in the fourth category are displayed in both the category selection window and the input panel, the number of item buttons displayed in the second item display section of the input panel may be smaller than the number of item buttons displayed in the category selection window and may be recommended based on usage frequency. However, the specific method of displaying item buttons may be implemented in various modified forms and is not limited thereto.

As previously described, the calendar application according to an embodiment of the present disclosure may be configured to allow input of four categories for a schedule. However, requiring the user to manually input all four categories for every schedule may be perceived as cumbersome from the user's perspective. Accordingly, through step S22, even if the user selects a category, i.e., an item button (e.g., a third category) for the schedule they wish to input at least once through at least one of the category selection window and the input panel, the calendar application may automatically display or recommend item buttons of a lower or upper category (e.g., a fourth category) associated with the user-selected item button. This may assist the user in easily performing the input of lower or upper categories.

That is, according to an embodiment of the present disclosure, by the user selecting an item button of a lower category (e.g., a fourth category), at least one item button of an upper category (e.g., a third category) may be automatically selected or recommended, and conversely, by the user selecting an item button of an upper category, at least one item button of a lower category may be automatically selected or recommended.

More specifically, since each item button presented for selection to the user is associated with at least one item button of an upper category, for example, when the user selects a specific item button of the third category, it is effectively equivalent to selecting the first category and the second category associated with the selected item button.

Additionally, in another example, when the user selects a specific item button of the fourth category without having selected an item button of the third category, there may be cases where the selected item button of the fourth category is associated with two or more item buttons of the third category. In this case, in the first item display section 223a of the input panel 220, item buttons of the third category that are associated with the selected item button of the fourth category may be displayed.

In step S23, a selection of at least one among the item buttons of the lower category may be received from the user.

In step S24, a selection of the registration button for registering the schedule may be received.

In step S25, in response to the user selecting the registration button, a schedule item may be generated in at least one of the timeline and the schedule display table of the calendar application's user interface. The generated schedule item pertains to a categorized schedule that has undergone the category input process (steps S20 to S23).

As described above, when four categories may be assigned to schedule data, a significant effect occurs in that meaningful statistical data may be obtained to effectively grasp the work efficiency and work progress status of not only individual users but also those of an entire institution, organization, or group.

### Artificial Intelligence-Based Category Recommendation Mechanism

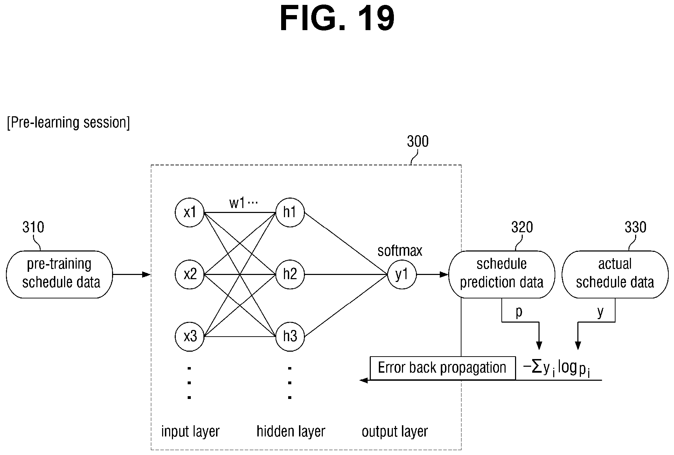

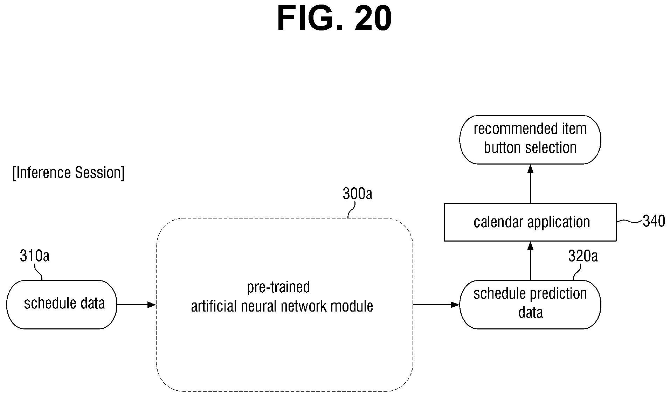

FIGS. 19 and 20 are diagrams illustrating a method for recommending categories for a schedule through an artificial neural network module according to another embodiment of the present disclosure.

As described above, according to another embodiment of the present disclosure, presenting recommended item buttons in the item display section 223 of the input panel 220, specifically in the first item display section 223a and the second item display section 223b, or presenting item buttons belonging to a lower category of the currently selected category in the category selection window 210, as briefly described above, may be based on selecting recommended item buttons through a recommendation mechanism utilizing artificial intelligence (Al).

The recommendation mechanism utilizing artificial intelligence in this case may, for example, use at least one of artificial neural network modules such as Transformer, Long-Short Term Memory (LSTM), Recurrent Neural Network (RNN), Convolutional Neural Network (CNN), Generative Adversarial Network (GAN), and AutoEncoder (AE). Alternatively, machine learning techniques such as multi-layer perceptron, Naive-Bayesian classification, and random forest classification may also be employed.

Referring to FIG. 19, as a non-limiting example, in a pre-training session of the artificial neural network module 300 for selecting recommended item buttons for schedule categories, pre-training schedule data 310 from multiple existing users may be provided as input to the artificial neural network module 300. Such pre-training schedule data may include schedule data of each existing user over a predetermined period.

The artificial neural network module 300 may output at least one piece of schedule prediction data 320 based on each piece of input pre-training schedule data 310. The schedule prediction data 320 may be data that predicts which schedules will be performed by the corresponding user in the future based on the input schedule data.

Then, in the pre-training session, the schedule prediction data 320 output by the artificial neural network module 300 may be compared with the actual schedule data 330 of real users. Based on this comparison, the artificial neural network module 300 may be pre-trained so that the loss function (-Σyᵢlogpᵢ) between the schedule prediction data 320 and the actual schedule data 330 is minimized. For example, the artificial neural network module 300 may adopt a method of updating the weights of the hidden layer based on the loss function or error between the schedule prediction data 320 and the actual schedule data 330. A plurality of pre-training schedule data 310 is input into each node of the input layer, such as x1, x2, and x3, and based on weights such as w1, it passes through hidden layers such as h1, h2, and h3. Then, using a cost function such as softmax, the predicted schedule prediction data is output as y1 in the output layer. Then, based on the error (-Σyᵢlogpᵢ) between the schedule prediction data 320 and the actual schedule data 330, the weights of the artificial neural network module 300 may be updated through backpropagation.

Referring to FIG. 20, in the inference session, when schedule data 310a is input into the pre-trained artificial neural network module 300a, the pre-trained artificial neural network module 300a may output schedule prediction data 320a based on this input. Then, based on the schedule prediction data 320a, the calendar application 340 may present one or more recommended item buttons 213a, 214a for a lower or upper category corresponding to the category of the item button selected by the user in the currently input schedule. As a non-limiting example, these recommended item buttons may be presented in at least one of the category selection window and the input panel of the calendar application.

As described above, an artificial intelligence-based category recommendation mechanism may be introduced into the calendar application by utilizing the artificial neural network modules 300, and 300a. However, various modifications may be made to the specific implementation method of the artificial neural network module, and it is not limited thereto.

### Computer-Readable Recording Medium

The fact that each step or operation of the method according to the embodiments of the present disclosure may be performed by a computer including one or more processors by executing a computer program stored in a computer-readable recording medium is apparent.

The computer-executable instructions stored in the aforementioned recording medium may be implemented through a computer program programmed to perform the corresponding steps, and such a computer program may be stored in a computer-readable recording medium and executed by a processor. The computer-readable recording medium may be a non-transitory readable medium. At this time, the non-transitory readable medium refers to a medium that does not store data for a brief moment, such as registers, cache, or memory, but rather stores data in a semi-permanent manner and is readable by a device. Specifically, programs for performing the various methods described above may be stored in and provided via non-transitory readable media, such as semiconductor memory devices including erasable programmable read-only memory (EPROM), electrically erasable programmable read-only memory (EEPROM), and flash memory devices; magnetic disks such as internal hard disks and removable disks; magnetooptical disks; and non-volatile memory including CD-ROM and DVD-ROM disks.

The methods according to various examples disclosed in this document may be provided as part of a computer program product. The computer program product may be distributed in the form of a machine-readable storage medium (e.g., compact disc read-only memory (CD-ROM)) or may be distributed online through an application store (e.g., Play Store^{™}). In the case of online distribution, at least a portion of the computer program product may be at least temporarily stored in a storage medium such as the memory of a manufacturer's server, an application store server, or an intermediary server, or may be temporarily generated.

As described above, those skilled in the art to which the present disclosure pertains will understand that the present disclosure may be embodied in various specific forms without departing from the technical spirit or essential characteristics thereof. Therefore, the above-described embodiments should be understood as illustrative in all respects and not as limiting. The scope of the present disclosure is defined by the claims set forth below rather than by the detailed description, and all modifications or variations derived from the meaning, scope, and equivalent concepts of the claims should be interpreted as being included within the scope of the present disclosure.

The features and advantages described herein do not encompass all possible features and advantages, and in particular, numerous additional features and advantages will become apparent to those skilled in the art upon consideration of the drawings, the specification, and the claims. Furthermore, it should be noted that the language used in the present specification has been primarily selected for readability and instructional purposes and may not have been chosen to describe or limit the subject matter of the present disclosure.

The foregoing description of the embodiments of the present disclosure has been provided for illustrative purposes. This is not intended to limit the present disclosure to the exact form disclosed or to be made without omission. Those skilled in the art will appreciate that numerous modifications and variations are possible in light of the above disclosure.

Accordingly, the scope of the present disclosure is not limited by the detailed description but is defined by any claims of the application based thereon. Thus, the disclosure of the embodiments of the present disclosure is exemplary and does not limit the scope of the present disclosure as set forth in the following claims.

## Claims

1. A method of inputting schedules including multiple categories, comprising:
providing, on a category selection window of a user interface of a calendar application, selectable item buttons corresponding to each of at least two categories of a schedule simultaneously, wherein the at least two categories are associated with each other, and the provided item buttons are set differently for each user;
receiving a selection of at least one item button among item buttons belonging to one of the at least two categories on the category selection window; and
in response to the selection of the at least one item button, modifying and presenting item buttons belonging to the other one of the at least two categories on the category selection window, wherein the number of the modified item buttons is smaller than the number of the item buttons before modification.

2. The method of inputting schedules including multiple categories according to claim 1, wherein the at least two categories have a relationship as an upper category and a lower category.

3. The method of inputting schedules including multiple categories according to claim 1,
wherein the user interface includes an input panel configured to input a time and a category for a schedule, and
the method further comprises:
displaying the selected at least one item button on the input panel in response to receiving a selection of at least one item button among item buttons belonging to one of the at least two categories on the category selection window.

4. The method of inputting schedules including multiple categories according to claim 3,
wherein the modifying and presenting item buttons belonging to the other one of the at least two categories on the category selection window in response to the selection of the at least one item button comprises:
presenting at least some of the modified and presented item buttons belonging to the other one of the at least two categories on the input panel.

5. The method of inputting schedules including multiple categories according to claim 4,
wherein the input panel includes a first item display section and a second item display section,
wherein the selected at least one item button is presented in the first item display section of the input panel, and
wherein at least some of the modified and presented item buttons belonging to the other one of the at least two categories are presented in the second item display section of the input panel.

6. The method of inputting schedules including multiple categories according to claim 1,
wherein the modifying and presenting item buttons belonging to the other one of the at least two categories on the category selection window in response to the selection of the at least one item button comprises:
presenting the modified and presented item buttons by ranking them based on usage frequency.

7. The method of inputting schedules including multiple categories according to claim 1, wherein:
the categories of the schedule include a first category, a second category, a third category, and a fourth category in order from upper to lower;
the one of the at least two categories on the category selection window is the third category, and the other of the at least two categories is the fourth category; and
by selecting the selected at least one item button, the first category and the second category are automatically determined.

8. The method of inputting schedules including multiple categories according to claim 1,
wherein, before receiving the selection of an item button, the selectable item buttons corresponding to each of the at least two categories of the schedule presented on the category selection window include either item buttons recently used by the user or all item buttons of a specific category.

9. The method of inputting schedules including multiple categories according to claim 1, further comprising:
receiving a selection of at least one of the modified and presented item buttons;
receiving a selection of a registration button for registering the schedule; and
in response to the selection of the registration button, generating a schedule item in at least one of a timeline or a schedule display table of the user interface.

10. A method of inputting schedules including multiple categories, comprising:
providing, on a category selection window of a user interface of a calendar application, at least one selectable item button for a specific category of a schedule;
receiving a selection of at least one item button among the at least one item button on the category selection window; and
presenting, on an input panel of the user interface, at least one item button for a category associated with the category to which the selected at least one item button belongs, wherein the input panel is configured to receive user input for time and category of the schedule.

11. The method of inputting schedules including multiple categories according to claim 10,
wherein the category associated with the category to which the selected at least one item button belongs is an upper category or a lower category of the category to which the selected at least one item button belongs.

12. The method of inputting schedules including multiple categories according to claim 10,
wherein the categories of the schedule include a first category, a second category, a third category, and a fourth category in order from upper to lower;
wherein the category to which the selected at least one item button belongs is the third category;
wherein the category associated with the category to which the selected at least one item button belongs is the fourth category; and
wherein by selecting the selected at least one item button, the first category and the second category are automatically determined.

13. An apparatus implementing an application for inputting schedules including multiple categories, the apparatus comprising:
a processor; and
a memory including computer-executable instructions,
wherein the computer-executable instructions, when executed by the processor, cause the processor to:
provide, on a category selection window of a user interface of a calendar application, selectable item buttons corresponding to each of at least two categories of a schedule simultaneously, wherein the at least two categories are associated with each other, and the provided item buttons are set differently for each user;
receive a selection of at least one item button among item buttons belonging to one of the at least two categories on the category selection window; and
in response to the selection of the at least one item button, modify and present item buttons belonging to the other one of the at least two categories on the category selection window, wherein the number of the modified item buttons is smaller than the number of the item buttons before modification.

14. A computer-readable recording medium storing computer-executable instructions,
wherein the computer-executable instructions, when executed by a processor, cause the processor to:
provide, on a category selection window of a user interface of a calendar application, selectable item buttons corresponding to each of at least two categories of a schedule simultaneously, wherein the at least two categories are associated with each other, and the provided item buttons are set differently for each user;
receive a selection of at least one item button among item buttons belonging to one of the at least two categories on the category selection window; and
in response to the selection of the at least one item button, modify and present item buttons belonging to the other one of the at least two categories on the category selection window, wherein the number of the modified item buttons is smaller than the number of the item buttons before modification.
